# EUROPEAN PATENT APPLICATION

(11) **EP 4 800 895 A1**
(43) Date of publication of application: **02.09.2026**
(21) Application number: 24882202.5
(22) Date of filing: 10.10.2024
(51) Int. Cl.: H02K 9/06, B64C 11/16, B64C 27/32, B64D 27/30, B64U 20/94, B64U 20/96, B64U 30/21, B64U 50/19, H02K 7/14, H02K 11/33

(54) **PROPULSION DEVICE**

(30) Priority: 27.10.2023 JP 2023184835
(71) Applicant: DENSO CORPORATION, Kariya-city, Aichi 448-8661 (JP)
(72) Inventor: SUZUKI, Hideaki, Kariya-city, Aichi 448-8661 (JP); NAKATA, Shingo, Kariya-city, Aichi 448-8661 (JP)
(74) Representative: TBK
(86) International application number: PCT/JP2024/036227
(87) International publication number: WO 2025/089086

(57) **Abstract**

A propulsion device (15) includes a motor device (60) and an outer peripheral duct (120). In the motor device (60), a motor (61) is housed in a motor housing (70). The motor housing (70) includes motor fins (79) provided on a motor outer wall (74). The outer peripheral duct (120) covers the motor housing (70) from the outer peripheral side. A duct flow path (123) is formed between the motor outer surface (76) and the outer peripheral duct (120). The motor outer wall (74) is provided with a motor inlet opening (175) and a motor outlet opening (176). A reverse internal airflow (W2) flows into a motor space (171) through the motor inlet opening (175), and flows out of the motor space (171) into the duct flow path (123) through the motor outlet opening (176).

## Description

### CROSS REFERENCE TO RELATED APPLICATION

This application is based on and incorporates herein by reference Japanese Patent Application No. 2023-184835 filed on October 27, 2023.

### TECHNICAL FIELD

The disclosure of the present specification relates to a propulsion device.

### BACKGROUND ART

Patent Literature 1 discloses a propulsion system mounted on an aircraft or the like. The propulsion system includes a motor, an inverter, and a case. The motor and the inverter are housed in the case. Radiating fins are provided on the outer surface of the case. The radiating fins release the heat of the motor and the inverter to the outside of the case.

### PRIOR ART LITERATURE

### PATENT LITERATURE

Patent Literature 1: WO 2020/115417 A1

### SUMMARY OF INVENTION

However, in Patent Literature 1 described above, since the heat of the motor and the inverter is released to the outside through the case, there is concern that the heat may accumulate inside the case. That is, there is concern that the heat dissipation effect of the case may be insufficient.

It is an object of the present disclosure to provide a propulsion device capable of enhancing a heat dissipation effect.

The multiple aspects disclosed in this specification employ different technical means from one another in order to achieve their respective objectives. In addition, the scope of claims and the reference numerals in parentheses described in this section are merely an example indicating a correspondence with specific means described in embodiments to be described later as one aspect, and are not intended to limit the technical scope.

In order to achieve the above object, a first aspect according to the present disclosure is a propulsion device configured to propel a mobile object. The propulsion device includes a propulsion drive unit configured to be driven by electric power to propel the mobile object; and a drive housing that houses the propulsion drive unit. The drive housing includes a housing inner surface defining a housing space in which the propulsion drive unit is housed, a housing outer surface facing outward away from the housing inner surface and extending along an outer flow path located outward of the housing inner surface, and a housing outlet opening connecting the outer flow path and the housing space and configured to allow gas to flow out of the housing space into the outer flow path.

According to the first aspect, the outer flow path is located outward of the housing inner surface. In this configuration, the heat of the propulsion drive unit is released to the outer flow path through the drive housing. Consequently, a heat dissipation effect of the drive housing can be enhanced by gas flowing through the outer flow path. Moreover, in the drive housing, the outer flow path and the housing space are connected by the housing outlet opening. In this configuration, the heat of the propulsion drive unit is easily released from the housing space to the outer flow path through the housing outlet opening along with the gas. Consequently, accumulation of heat inside the drive housing can be reduced by the housing outlet opening and the outer flow path. Thus, the heat dissipation effect of the propulsion device can be enhanced by the housing outlet opening and the outer flow path.

A second aspect is a propulsion device mounted on an aerial vehicle including an occupant compartment and configured to propel the aerial vehicle. The propulsion device includes a motor configured to be driven by electric power to propel the aerial vehicle; and a drive housing that houses the motor. The drive housing includes a housing inner surface defining a housing space in which the motor is housed, a housing outer surface facing outward away from the housing inner surface and extending along an outer flow path located outward of the housing inner surface, a housing outer peripheral wall extending in an axial direction and facing an outer peripheral side of the motor, a housing covering wall facing the motor in the axial direction, a housing outlet opening provided in the housing outer peripheral wall, connecting the outer flow path and the housing space, and configured to allow gas to flow out of the housing space into the outer flow path, and a housing inlet opening provided in the housing covering wall, through which the housing space communicates with an outside of the drive housing, allowing gas to flow into the housing space from the outside of the drive housing through the housing inlet opening. The motor includes a motor rotor configured to rotate about a rotation axis, and a drive shaft configured to rotate according to driving of the motor. The drive shaft includes a shaft inlet opening through which an internal space of the drive shaft communicates with an outside of the drive shaft, allowing gas to flow into the internal space from the housing inlet opening, and a shaft outlet opening connecting the internal space and the housing space and configured to allow gas to flow out of the internal space into the housing space. The motor rotor includes a rotor blade configured to create an airflow that causes gas to flow out of the housing space into the outer flow path through the housing outlet opening according to rotation of the motor rotor. The propulsion device further includes a foreign matter restriction part configured to allow gas to flow into the housing inlet opening and restrict entry of foreign matter into the housing space through the housing inlet opening; and an outflow restriction part provided to the housing outlet opening and configured to transition between a restriction state restricting outflow of gas through the housing outlet opening and an allowance state allowing outflow of gas through the housing outlet opening. The outflow restriction part includes an elastic restriction part configured to transition from the restriction state to the allowance state by being elastically deformed by a flow of gas through the outer flow path, and transition from the allowance state to the restriction state by exerting restoring force against the flow of gas through the outer flow path. The propulsion device further includes an air-blowing fan configured to create an airflow that causes gas to flow out of the housing space into the outer flow path through the housing outlet opening; and an outer duct covering the housing outer surface and the housing outlet opening and forming the outer flow path between the outer duct and the housing outer surface.

According to the second aspect, similarly to the first aspect, the heat dissipation effect of the propulsion device can be enhanced by the housing outlet opening and the outer flow path.

### BRIEF DESCRIPTION OF DRAWINGS

FIG. 1 is a diagram illustrating a configuration of an eVTOL according to a first embodiment.
FIG. 2 is a block diagram illustrating an electrical configuration of an EPU.
FIG. 3 is a schematic longitudinal sectional view of a propulsion device.
FIG. 4 is a cross-sectional view taken along line IV-IV in FIG. 3, and is a schematic transverse sectional view of the propulsion device.
FIG. 5 is a longitudinal sectional view of a motor space and its surroundings in the propulsion device.
FIG. 6 is a diagram for explaining the behavior of water droplets in a first situation.
FIG. 7 is a diagram for explaining the behavior of water droplets in a second situation.
FIG. 8 is a diagram for explaining the behavior of water droplets in a third situation.
FIG. 9 is a diagram for explaining the behavior of water droplets in a fourth situation.
FIG. 10 is a diagram for explaining the behavior of water droplets in a fifth situation.
FIG. 11 is a schematic longitudinal sectional view of a propulsion device according to a second embodiment.
FIG. 12 is a diagram for explaining the behavior of water droplets in a sixth situation.
FIG. 13 is a diagram for explaining the behavior of water droplets in a seventh situation.
FIG. 14 is a schematic longitudinal sectional view of a propulsion device according to a third embodiment.
FIG. 15 is a schematic longitudinal sectional view of a propulsion device according to a fourth embodiment.
FIG. 16 is a schematic longitudinal sectional view of a propulsion device according to a fifth embodiment.
FIG. 17 is a block diagram illustrating an electrical configuration of an EPU.
FIG. 18 is a flowchart illustrating a procedure of an EPU control process.
FIG. 19 is a flowchart illustrating a procedure of an EPU control process according to a sixth embodiment.
FIG. 20 is a flowchart illustrating a procedure of an EPU control process according to a seventh embodiment.
FIG. 21 is a flowchart illustrating a procedure of an EPU control process according to an eighth embodiment.
FIG. 22 is a diagram for explaining an opening and closing operation of an outflow control valve.
FIG. 23 is a schematic longitudinal sectional view of a propulsion device according to a ninth embodiment.
FIG. 24 is a longitudinal sectional view of a motor space and its surroundings in the propulsion device.
FIG. 25 is a schematic longitudinal sectional view of a propulsion device according to a tenth embodiment.
FIG. 26 is a schematic longitudinal sectional view of a propulsion device according to an eleventh embodiment.
FIG. 27 is a schematic longitudinal sectional view of a propulsion device according to a twelfth embodiment.
FIG. 28 is a schematic longitudinal sectional view of a propulsion device according to a thirteenth embodiment.
FIG. 29 is a schematic longitudinal sectional view of a propulsion device according to a fourteenth embodiment.
FIG. 30 is a schematic longitudinal sectional view of a propulsion device according to a fifteenth embodiment.
FIG. 31 is a schematic longitudinal sectional view of a propulsion device according to a sixteenth embodiment.
FIG. 32 is a schematic longitudinal sectional view of a propulsion device according to a seventeenth embodiment.

### EMBODIMENTS FOR CARRYING OUT INVENTION

Hereinafter, multiple embodiments will be described with reference to the drawings. Elements corresponding to each other among the embodiments are assigned the same numeral and their descriptions may be omitted. When only a part of a component is described in an embodiment, the other part of the component can be relied on the component of a preceding embodiment. Furthermore, in addition to the combination of components explicitly described in each embodiment, it is also possible to combine components from different embodiments, as long as the combination poses no difficulty, even if not explicitly described.

### <First Embodiment>

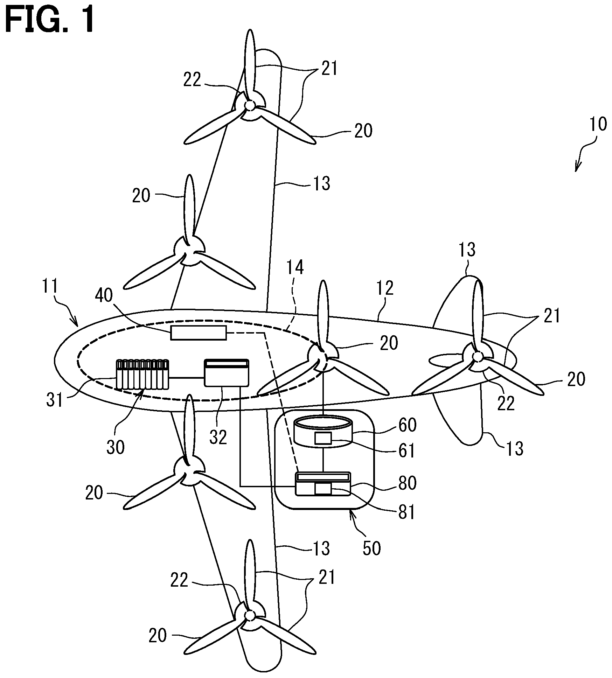

A propulsion system 30 illustrated in FIG. 1 is mounted on an eVTOL 10. The eVTOL 10 is an electric vertical take-off and landing aircraft. The electric vertical take-off and landing aircraft is an electrically powered vertical take-off and landing aircraft, and can execute vertical take-offs and landings. eVTOL is an abbreviation for electric vertical take-off and landing aircraft. The eVTOL 10 is an electrically powered aerial vehicle that flies in the air, and is sometimes referred to as an electric aerial vehicle. The eVTOL 10 is also an electrically powered aircraft and is sometimes referred to as an electric aircraft. The eVTOL 10 is a manned aerial vehicle in which occupants ride. Occupants of the eVTOL 10 include a pilot as a manipulator or an operator. The propulsion system 30 is a system that drives the eVTOL 10 to cause the eVTOL 10 to fly. The propulsion system 30 is sometimes referred to as a flight system.

The eVTOL 10 includes an airframe 11 and propellers 20. The airframe 11 includes an airframe body 12 and wings 13. The airframe body 12 is the fuselage of the airframe 11 and has, for example, a shape extending in the front-rear direction. The wings 13 extend from the airframe body 12 and are provided on the airframe body 12. The wings 13 are fixed wings. The wings 13 include main wings, tails, etc.

The eVTOL 10 includes compartments. The compartments are provided inside the eVTOL 10. For example, the compartments are internal spaces of the airframe body 12 and formed by the airframe body 12. Examples of the compartments include occupant compartments 14 and a cargo compartment. Examples of the occupant compartments 14 include a passenger compartment and a pilot compartment. The occupant compartments 14 are provided with seats on which occupants sit. In the occupant compartments 14, occupants need not ride, and cargo may be accommodated.

The propellers 20 are provided on the airframe 11. The eVTOL 10 is a multicopter with at least three propellers 20. For example, at least four propellers 20 are provided on the airframe 11. The propellers 20 are provided on each of the airframe body 12 and the wings 13. The propellers 20 each rotate about a propeller axis Cp. The propeller axis Cp is the rotation axis of each of the propellers 20. The propeller axis Cp is, for example, the center line of each of the propellers 20. The propellers 20 can generate thrust and lift on the eVTOL 10. The propellers 20 are sometimes referred to as rotors or rotary wings.

Each propeller 20 includes propeller blades 21 and a propeller boss 22. The propeller blades 21 are arranged in the circumferential direction of the propeller axis Cp. The propeller boss 22 connects the propeller blades 21. Each propeller 20 has a propeller shaft 23 extending from the propeller boss 22 along the propeller axis Cp.

Flight modes of the eVTOL 10 include vertical takeoff, vertical landing, cruise, hovering, and the like. The flight modes are sometimes referred to as flight states. In vertical takeoff, the eVTOL 10 can take off without running. In vertical takeoff, the eVTOL 10 may ascend vertically or obliquely upward. In vertical landing, the eVTOL 10 can land without running. In vertical landing, the eVTOL 10 may descend vertically or obliquely downward.

Cruise is sometimes referred to as horizontal flight. In cruise, the eVTOL 10 may fly horizontally without moving in the up-and-down direction, or may fly horizontally while moving in the up-and-down direction. Hovering is sometimes referred to as stationary flight. In hovering, the eVTOL 10 may fly as if it is stopped at a predetermined position in the air, or the eVTOL 10 may deviate from the predetermined position in the up-and-down direction or the horizontal direction.

The flight modes of the eVTOL 10 include lift. In lift, the eVTOL 10 moves in the up-and-down direction. In lift, the eVTOL 10 may ascend obliquely upward and may descend obliquely downward. The eVTOL 10 lifts upward to take off vertically. The eVTOL 10 lifts downward to land vertically.

The eVTOL 10 is a tiltrotor aircraft. In the eVTOL 10, the tilt angle of the propellers 20 can be adjusted. In the eVTOL 10, it is possible to cause one propeller 20 to function as both a lift propeller and a cruise propeller. For example, when the eVTOL 10 lifts, the tilt angle is adjusted so that the propellers 20 function as lift rotors. When the eVTOL 10 cruises, the tilt angle is adjusted so that the propellers 20 function as cruise rotors. The eVTOL 10 need not be a tiltrotor aircraft. For example, the eVTOL 10 may include lift propellers 20 and cruise propellers 20 separately.

The eVTOL 10 includes a battery 31, a distributor 32, a communication unit 34, a flight control device 40, and EPUs 50. The battery 31, the distributor 32, the communication unit 34, the flight control device 40, and the EPUs 50 are included in the propulsion system 30. The propulsion system 30 only needs to include at least the flight control device 40 and the EPUs 50. The flight control device 40 is sometimes referred to as a flight controller.

The battery 31 is connected to the EPUs 50 so as to be able to supply power to the EPUs 50. The battery 31 is a power supply unit that supplies power to the EPUs 50 and corresponds to a power supply. The battery 31 is a DC voltage source that applies a DC voltage to the EPUs 50. The battery 31 includes a chargeable and dischargeable secondary battery. Examples of the secondary battery include a lithium-ion battery and a nickel metal hydride battery. The battery 31 can store power and corresponds to a power storage device. As a power supply, a fuel cell, a generator, or the like may be used in addition to or in place of the battery 31.

The distributor 32 is electrically connected to the battery 31 and the EPUs 50. The distributor 32 distributes power from the battery 31 to the EPUs 50. The battery 31 is electrically connected to the EPUs 50 via the distributor 32. The battery 31 supplies power to the EPUs 50 via the distributor 32.

The communication unit 34 is a communication device capable of performing wireless communication with an external device. The external device is a device located away from the eVTOL 10. Examples of the external device include a communication device provided in an external facility on the ground and a communication device provided in another aerial vehicle. Examples of the external facility include a control center and a management center. The communication unit 34 can communicate with the flight control device 40. The communication unit 34 is connected to the flight control device 40 so as to be able to perform wired communication. The communication unit 34 may be capable of wirelessly communicating with the flight control device 40.

In FIGS. 1 to 3, the EPUs 50 are devices driven to drive and rotate the propellers 20, and correspond to drive devices. EPU is an abbreviation for electric propulsion unit. The EPUs 50 are sometimes referred to as electric drive devices or electric drive systems. The EPUs 50 are individually provided to the corresponding propellers 20. The EPUs 50 are aligned with the propellers 20 along the propeller axis Cp. All of the EPUs 50 are fixed to the airframe 11. The EPUs 50 rotatably support the propellers 20. The EPUs 50 are connected to the propellers 20. The propellers 20 are fixed to the airframe 11 via the EPUs 50.

The eVTOL 10 includes propulsion devices 15. The propulsion devices 15 include the propellers 20 and the EPUs 50. The propulsion devices 15 are devices for propelling the eVTOL 10. The propulsion devices 15 rotate the propellers 20 to cause the eVTOL 10 to fly. The eVTOL 10 is a mobile object that is moved by the propulsion devices 15. The propulsion devices 15 are provided on the eVTOL 10. One propulsion device 15 includes one propeller 20 and one EPU 50 for driving the propeller 20. Of the propellers 20 and the EPUs 50, only the EPUs 50 may be referred to as the propulsion devices 15.

Each EPU 50 includes a motor device 60 and inverter devices 80. The motor device 60 and the inverter devices 80 are formed in a short cylindrical shape as a whole, and extend in an axial direction AD. The motor device 60 and the inverter devices 80 are arranged in the axial direction AD. The motor device 60 and the inverter devices 80 are placed on each other in the axial direction AD. The motor device 60 and the inverter devices 80 are provided coaxially. The center line of the inverter devices 80 coincides with a motor axis Cm. The motor device 60 is provided between the inverter devices 80 and the propeller 20 in the axial direction AD.

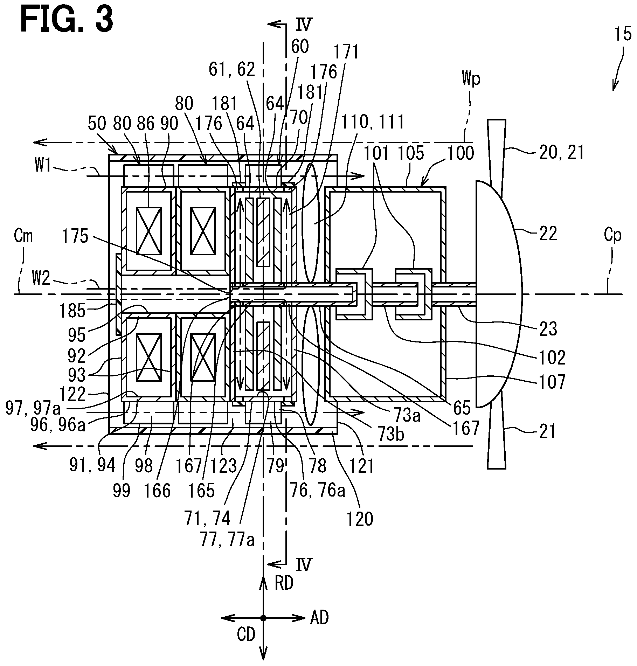

The motor device 60 includes a motor 61 and a motor housing 70. The motor housing 70 is a casing and houses the motor 61. The motor housing 70 includes a motor space 171 (see FIG. 3). The motor space 171 is the internal space of the motor housing 70. The motor 61 is accommodated in the motor space 171. The motor housing 70 corresponds to a drive housing. The motor space 171 corresponds to a housing space.

The motor 61 is driven to propel the eVTOL 10. The motor 61 is driven by power from the battery 31. The motor 61 corresponds to a propulsion drive unit. The motor device 60 is a flight drive source of the eVTOL 10 and functions as an electric motor. The motor 61 is a multiphase AC motor. For example, the motor 61 is a brushless motor. The motor 61 is sometimes referred to as a rotating electrical machine. The motor 61 is a motor generator. The motor 61 functions as a generator during regeneration.

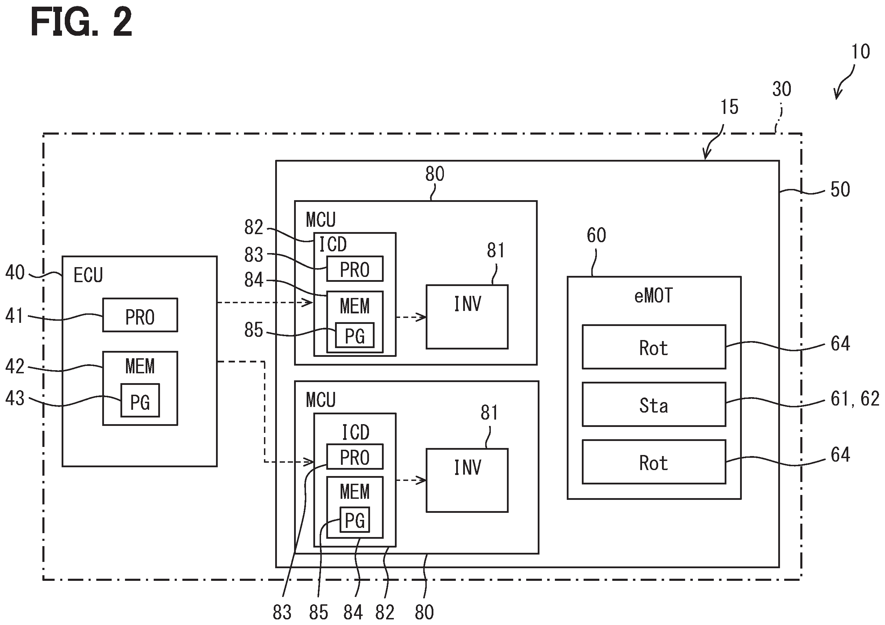

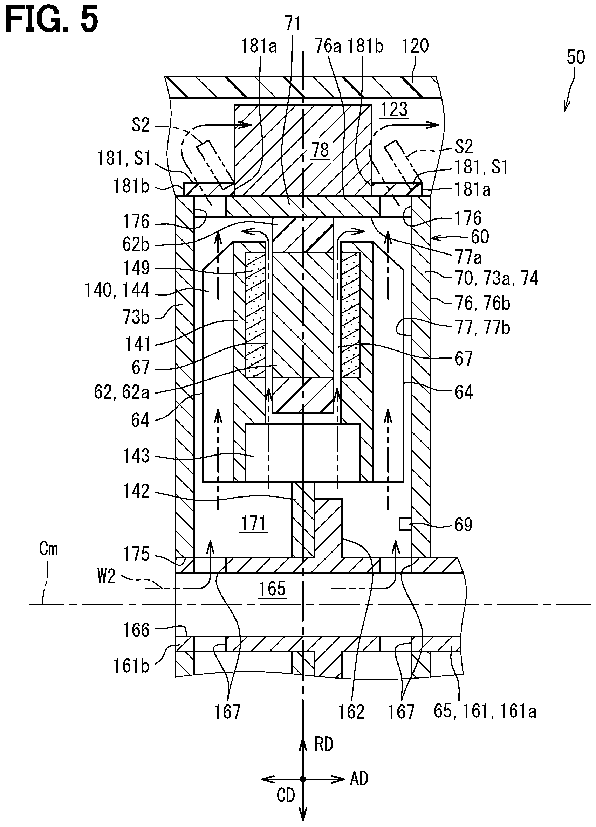

The motor 61 includes a motor stator 62, motor rotors 64, and a motor shaft 65. The motor 61 includes mechanical parts such as the motor stator 62, the motor rotors 64, and the motor shaft 65. The motor stator 62 is a stator and is fixed to the motor housing 70. The motor stator 62 includes a stator coil 62a (see FIG. 5). The stator coil 62a is coils of multiple phases. The stator coil 62a is windings and forms an armature. In FIG. 2, the motor device 60 is denoted as eMOT, the motor stator 62 as Sta, and the motor rotors 64 as Rot.

The motor rotors 64 are rotors and rotate relative to the motor stator 62. The motor rotors 64 include rotor magnets 149 (see FIG. 5). The rotor magnets 149 are formed of permanent magnets or the like. The rotor magnets 149 form a field. The rotor magnets 149 are arranged in a circumferential direction CD.

The motor shaft 65 supports the motor rotors 64. The motor shaft 65 rotates with the motor rotors 64. The motor shaft 65 is rotatably supported by bearings or the like. The motor shaft 65 is formed of a metal material or the like and has thermal conductivity. The motor shaft 65 extends in the axial direction AD. The motor shaft 65 is connected to the propeller 20. In the propulsion device 15, the propeller 20 rotates with the motor shaft 65. The motor shaft 65 rotates as the motor 61 is driven. The motor shaft 65 corresponds to a drive shaft.

The motor 61 is an axial gap motor. In the motor 61, the motor stator 62 and the motor rotors 64 are arranged in the axial direction AD. The motor 61 is a double rotor motor. In the motor 61, two motor rotors 64 are arranged with the motor stator 62 therebetween in the axial direction AD.

The axial direction AD is a direction in which the motor axis Cm extends. The motor axis Cm is the rotation axis of the motor rotors 64. The motor rotors 64 rotate about the motor axis Cm. The motor axis Cm is, for example, the center line of the motor rotors 64. The motor axis Cm is also the center lines of the motor 61, the motor stator 62, and the motor shaft 65. The motor axis Cm corresponds to a rotation axis. With respect to the motor axis Cm, the axial direction AD, a radial direction RD, and the circumferential direction CD are orthogonal to each other. The outer side in the radial direction RD is sometimes referred to as the radially outer side or the outer peripheral side. The inner side in the radial direction RD is sometimes referred to as the radially inner side or the inner peripheral side.

The inverter devices 80 drive the motor device 60. The inverter devices 80 are sometimes referred to as motor drive devices or power conversion devices. As illustrated in FIG. 3, each inverter device 80 includes an inverter unit 86 and an inverter housing 90. The inverter housing 90 is a casing and houses the inverter unit 86. The inverter unit 86 is housed in the internal space of the inverter housing 90. The inverter unit 86 extends annularly in the circumferential direction CD as a whole.

The inverter units 86 are driven to propel the eVTOL 10. The inverter units 86 are driven by power from the battery 31. The inverter units 86 supply power to the motor 61 to drive the motor 61. The inverter units 86 convert power to be supplied to the motor 61. The inverter units 86 are sometimes referred to as motor drive units or power conversion units.

As illustrated in FIG. 2, each inverter device 80 includes an inverter circuit 81 and an inverter control unit 82. The inverter circuit 81 is a circuit for converting power. The inverter circuit 81 performs power conversion for each of the multiple phases. The inverter circuit 81 converts DC power from the battery 31 into AC power and supplies the AC power to the motor 61. The inverter circuit 81 is, for example, a DC-AC conversion circuit. For example, the inverter circuit 81 includes upper and lower arm circuits for the multiple phases.

The inverter control unit 82 performs motor control to control the motor 61. The inverter control unit 82 is communicatively connected to the inverter circuit 81. The inverter control unit 82 controls the inverter circuit 81 to perform motor control. The inverter control unit 82 outputs a command signal to the inverter circuit 81. The inverter control unit 82 is sometimes referred to as a control circuit or a motor control unit.

The inverter control unit 82 is a control device such as an ECU. ECU is an abbreviation for electronic control unit. The inverter control unit 82 includes a processor 83, a memory 84, and a program 85. The inverter control unit 82 is configured mainly with a computer. The computer includes the processor 83, the memory 84, an input-output interface, a bus that connects them, and the like. The memory 84 stores the program 85. The program 85 is a program to perform flight control. In FIG. 2, the inverter circuit 81 is denoted as INV, the inverter control unit 82 as MCU, the inverter control unit 82 as ICD, the processor 83 as PRO, the memory 84 as MEM, and the program 85 as PG.

The processor 83 is hardware for arithmetic processing coupled to the memory 84. The processor 83 executes various processes such as a flight control process by accessing the memory 84. The memory 84 is a storage medium storing a control program and the like. For example, the memory 84 is a non-transitory tangible storage medium that non-transitorily stores a computer-readable program and data. The non-transitory tangible storage medium is implemented by a semiconductor memory, a magnetic disk, or the like. The program 85 includes computer-readable instructions to cause the processor 83 to perform various functions. The processor 83 is a processing unit that executes instructions included in the program 85 to perform a predetermined process.

The EPU 50 includes the motor device 60 and the inverter devices 80. In the EPU 50, the inverter devices 80 control the motor device 60. For example, the stator coil 62a includes a plurality of individual coils. The individual coils are coils of the multiple phases. One of the inverter circuits 81 supplies power to at least one individual coil to drive the motor 61. The other of the inverter circuits 81 supplies power to another individual coil to drive the motor 61. In the present embodiment, the stator coil 62a includes two three-phase coils and is a six-phase coil. The two inverter devices 80 supply power to the two three-phase coils, so that the motor 61 is driven as a six-phase motor.

In FIGS. 2 and 3, each inverter unit 86 forms the inverter circuit 81, the inverter control unit 82, and the like. The inverter unit 86 includes a circuit board, switch components, and the like. In the inverter unit 86, the inverter circuit 81 and the inverter control unit 82 are formed by mounting the switch components on the circuit board, for example. The inverter unit 86 may include a capacitor component, a filter component, and the like.

As illustrated in FIG. 2, the eVTOL 10 includes the flight control device 40. The flight control device 40 performs flight control to cause the eVTOL 10 to fly. The flight control device 40 centrally controls various devices such as the EPUs 50 mounted on the eVTOL 10. The flight control includes EPU control to drive the EPUs 50. The EPU control includes motor control to drive the motors 61.

The flight control device 40 is a control device such as an ECU. The flight control device 40 includes a processor 41, a memory 42, and a program 43. The flight control device 40 is configured mainly with a computer. The computer includes the processor 41, the memory 42, an input-output interface, a bus that connects them, and the like. The memory 42 stores the program 43. The program 43 is a program to perform the flight control. In FIG. 2, the flight control device 40 is denoted as ECU, the processor 41 as PRO, the memory 42 as MEM, and the program 43 as PG.

The processor 41 is hardware for arithmetic processing coupled to the memory 42. The processor 41 executes various processes such as a flight control process by accessing the memory 42. The memory 42 is a storage medium storing a control program and the like. For example, the memory 42 is a non-transitory tangible storage medium that non-transitorily stores a computer-readable program and data. The program 43 includes computer-readable instructions that cause the processor 41 to perform various functions. The processor 41 is a processing unit that executes instructions included in the program 43 to perform a predetermined process.

The flight control device 40 is communicatively connected to the inverter control units 82. The flight control device 40 performs the flight control according to the results of detection by various sensors and the like. The flight control includes propulsion control to drive the propulsion devices 15. The propulsion control includes EPU control to drive the EPUs 50, motor control to drive the motors 61, and the like. The flight control device 40 outputs command signals and the like to the inverter control units 82. The flight control device 40 corresponds to a propulsion control device.

The inverter control units 82 perform motor control to drive the motor device 60. Each inverter control unit 82 controls power to be supplied from the inverter circuit 81 to the stator coil 62a as the motor control. For example, in the motor control, energization of the stator coil 62a is controlled. The inverter control units 82 perform the motor control in accordance with command signals and the like from the flight control device 40.

As illustrated in FIG. 3, the motor housing 70 is a cylindrical housing as a whole. The motor housing 70 includes a motor outer wall 74 and motor fins 79. The motor outer wall 74 and the motor fins 79 are formed of a metal material or the like and have thermal conductivity. The motor outer wall 74 is the outer wall of the motor housing 70. The motor outer wall 74 forms the outer surface and the inner surface of the motor housing 70. The motor outer wall 74 forms the motor space 171. The motor outer wall 74 extends in a wall shape along the outer surface and the inner surface of the motor housing 70.

The motor outer wall 74 includes a motor outer surface 76 and a motor inner surface 77. The motor outer surface 76 is the outer surface of the motor outer wall 74. The motor outer surface 76 forms the outer surface of the motor housing 70. The motor inner surface 77 is the inner surface of the motor outer wall 74. The motor inner surface 77 forms the inner surface of the motor housing 70. The motor inner surface 77 forms the motor space 171. The motor inner surface 77 corresponds to a housing inner surface. The motor outer surface 76 is provided outside the motor inner surface 77. The motor outer surface 76 corresponds to a housing outer surface.

As illustrated in FIG. 5, the motor outer surface 76 includes a motor outer peripheral outer surface 76a and motor facing outer surfaces 76b. The motor outer peripheral outer surface 76a is a portion extending in a direction orthogonal to the radial direction RD in the motor outer surface 76. The motor outer peripheral outer surface 76a annularly extends in the circumferential direction CD. The motor facing outer surfaces 76b are portions extending in a direction orthogonal to the axial direction AD in the motor outer surface 76. The motor facing outer surfaces 76b are arranged in a pair in the axial direction AD with the motor outer peripheral outer surface 76a therebetween. The motor outer peripheral outer surface 76a extends in the axial direction AD between the pair of motor facing outer surfaces 76b.

The motor inner surface 77 includes a motor outer peripheral inner surface 77a and motor facing inner surfaces 77b. The motor outer peripheral inner surface 77a is a portion extending in a direction orthogonal to the radial direction RD in the motor inner surface 77. The motor outer peripheral inner surface 77a annularly extends in the circumferential direction CD. The motor outer peripheral inner surface 77a is provided on the inner peripheral side of the motor outer peripheral outer surface 76a in the radial direction RD. The motor facing inner surfaces 77b are portions extending in a direction orthogonal to the axial direction AD in the motor inner surface 77. The motor facing inner surfaces 77b are arranged in a pair in the axial direction AD with the motor outer peripheral inner surface 77a therebetween. The motor outer peripheral inner surface 77a extends in the axial direction AD between the pair of motor facing inner surfaces 77b. The motor facing inner surfaces 77b are provided inside the motor facing outer surfaces 76b in the axial direction AD.

As illustrated in FIGS. 3 and 5, the motor outer wall 74 includes a motor outer peripheral wall 71, a first motor facing wall 73a, and a second motor facing wall 73b. The motor outer peripheral wall 71 is the outer peripheral wall of the motor housing 70. The motor outer peripheral wall 71 is a portion extending in a direction orthogonal to the radial direction RD in the motor outer wall 74. The motor outer peripheral wall 71 annularly extends in the circumferential direction CD. The motor outer peripheral wall 71 forms the motor outer peripheral outer surface 76a and the motor outer peripheral inner surface 77a. The motor outer peripheral wall 71 covers at least part of the motor 61 from the outer peripheral side. For example, the motor outer peripheral wall 71 is formed by a tubular member. The motor outer peripheral wall 71 corresponds to a housing outer peripheral wall.

The motor facing walls 73a and 73b are the facing walls of the motor housing 70. The motor facing walls 73a and 73b are portions extending in a direction orthogonal to the axial direction AD in the motor outer wall 74. The first motor facing wall 73a and the second motor facing wall 73b are arranged in the axial direction AD. The first motor facing wall 73a and the second motor facing wall 73b face each other across the motor outer peripheral wall 71. The second motor facing wall 73b is provided opposite to the propeller 20 across the first motor facing wall 73a. The second motor facing wall 73b corresponds to a housing covering wall.

The motor outer peripheral wall 71 is extended between the first motor facing wall 73a and the second motor facing wall 73b. The motor facing walls 73a and 73b form the motor facing outer surfaces 76b and the motor facing inner surfaces 77b. The motor facing walls 73a and 73b cover at least part of the motor 61 from the axial direction AD. For example, the motor facing walls 73a and 73b are formed by plate-shaped members such as end plates. The plate-shaped members forming the motor facing walls 73a and 73b are fixed to the tubular member forming the motor outer peripheral wall 71 with bolts or the like.

The motor fins 79 are provided on the motor outer surface 76. For example, the motor fins 79 are provided on the motor outer peripheral outer surface 76a. The motor fins 79 extend from the motor outer peripheral outer surface 76a toward the outer peripheral side. The motor fins 79 are provided on the motor outer wall 74. For example, the motor fins 79 are provided on the motor outer peripheral wall 71. The motor fins 79 can release the heat of the motor 61 to the outside of the motor housing 70. The motor fins 79 are radiating fins. The motor fins 79 extend in directions orthogonal to the circumferential direction CD.

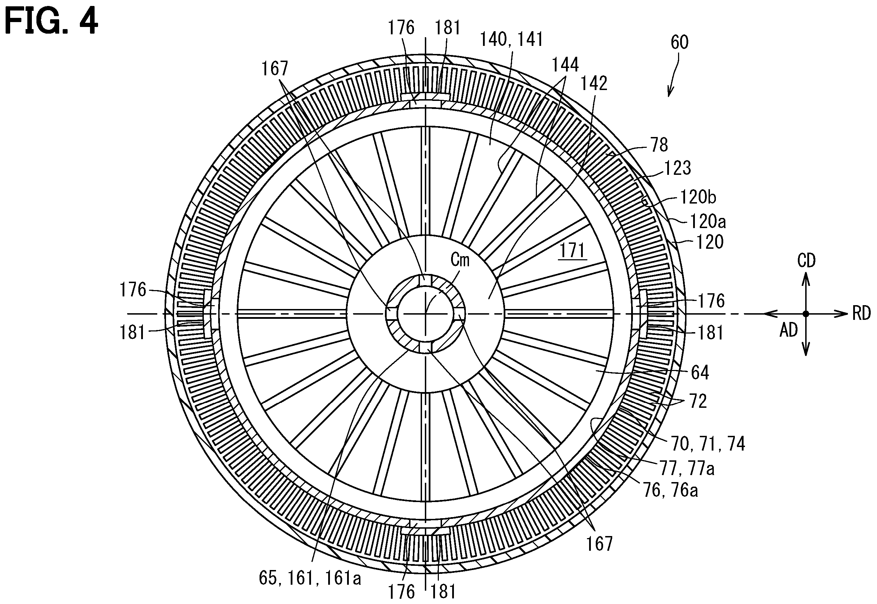

As illustrated in FIG. 4, the motor fins 79 are arranged in the circumferential direction CD. The motor fins 79 are arranged in the circumferential direction CD along the outer peripheral edge of the motor 61. For example, the motor fins 79 are arranged in the circumferential direction CD along the outer peripheral edges of the motor rotors 64 and the outer peripheral edge of the motor stator 62.

As illustrated in FIG. 3, the inverter housings 90 are annular housings as a whole. The inverter housings 90 include an inverter housing hole 95. The inverter housing hole 95 passes through the inverter housings 90 in the axial direction AD. The inverter housing hole 95 extends in the axial direction AD along the motor axis Cm. The inverter housing hole 95 is provided in the center of the inverter housings 90. The center line of the inverter housing hole 95 coincides with the motor axis Cm.

Each inverter housing 90 includes an inverter outer wall 94 and inverter fins 99. The inverter outer wall 94 and the inverter fins 99 are formed of a metal material or the like and have thermal conductivity. The inverter outer wall 94 is the outer wall of the inverter housing 90. The inverter outer wall 94 forms the outer surface and the inner surface of the inverter housing 90. The inverter outer wall 94 forms the internal space of the inverter housing 90. The inverter outer wall 94 extends in a wall shape along the outer surface of the inverter housing 90.

The inverter outer wall 94 includes an inverter outer surface 96 and an inverter inner surface 97. The inverter outer surface 96 is the outer surface of the inverter outer wall 94. The inverter outer surface 96 forms the outer surface of the inverter housing 90. The inverter inner surface 97 is the inner surface of the inverter outer wall 94. The inverter inner surface 97 forms the inner surface of the inverter housing 90. The inverter inner surface 97 forms the internal space of the inverter housing 90.

The inverter outer surface 96 includes an inverter outer peripheral outer surface 96a. The inverter outer peripheral outer surface 96a is a portion extending in a direction orthogonal to the radial direction RD in the inverter outer surface 96. The inverter outer peripheral outer surface 96a extends annularly in the circumferential direction CD. The inverter outer surface 96 includes inverter facing outer surfaces and an inverter inner peripheral outer surface. The inverter facing outer surfaces are portions extending in a direction orthogonal to the axial direction AD in the inverter outer surface 96. The inverter inner peripheral outer surface is a portion forming the inverter housing hole 95 in the inverter outer surface 96.

The inverter inner surface 97 includes an inverter outer peripheral inner surface 97a. The inverter outer peripheral inner surface 97a is a portion extending in a direction orthogonal to the radial direction RD in the inverter inner surface 97. The inverter outer peripheral inner surface 97a annularly extends in the circumferential direction CD. The inverter outer peripheral inner surface 97a is provided on the inner peripheral side of the inverter outer peripheral outer surface 96a in the radial direction RD. The inverter inner surface 97 includes inverter facing inner surfaces. The inverter facing inner surfaces are portions extending in a direction orthogonal to the axial direction AD in the inverter inner surface 97.

The inverter outer wall 94 includes an inverter outer peripheral wall 91, an inverter inner peripheral wall 92, and inverter facing walls 93. The inverter outer peripheral wall 91 and the inverter inner peripheral wall 92 are portions extending in a direction orthogonal to the radial direction RD in the inverter outer wall 94. The inverter outer peripheral wall 91 and the inverter inner peripheral wall 92 annularly extend in the circumferential direction CD. The inverter outer peripheral wall 91 is the outer peripheral wall of the inverter housing 90. The inverter outer peripheral wall 91 forms the inverter outer peripheral outer surface 96a. The inverter outer peripheral wall 91 covers at least part of the inverter unit 86 from the outer peripheral side. The inverter inner peripheral wall 92 forms the inverter housing hole 95. The inverter inner peripheral wall 92 is located away from the inverter outer peripheral wall 91 toward the inner periphery.

The inverter facing walls 93 are the facing walls of the inverter housing 90. The inverter facing walls 93 are portions extending in a direction orthogonal to the axial direction AD in the inverter outer wall 94. The inverter facing walls 93 are arranged in a pair in the axial direction AD. The pair of inverter facing walls 93 face each other across the inverter outer peripheral wall 91. The inverter outer peripheral wall 91 is extended between the pair of inverter facing walls 93. The inverter facing walls 93 form the inverter facing outer surfaces and the inverter facing inner surfaces. The inverter facing walls 93 cover at least part of the inverter unit 86 from the axial direction AD.

The inverter fins 99 are provided on the inverter outer surface 96. For example, the inverter fins 99 are provided on the inverter outer peripheral outer surface 96a. The inverter fins 99 extend from the inverter outer peripheral outer surface 96a toward the outer peripheral side. The inverter fins 99 are provided on the inverter outer wall 94. For example, the inverter fins 99 are provided on the inverter outer peripheral wall 91. The inverter fins 99 can release the heat of the inverter unit 86 to the outside of the inverter housing 90. The inverter fins 99 are radiating fins. The inverter fins 99 extend in directions orthogonal to the circumferential direction CD. The inverter fins 99 are arranged in the circumferential direction CD. The inverter fins 99 are arranged in the circumferential direction CD along the outer peripheral edge of the inverter unit 86.

The EPU 50 includes a gear device 100. The gear device 100 mechanically connects the motor device 60 and the propeller 20. The gear device 100 transmits the drive of the motor device 60 to the propeller 20. The gear device 100 is provided between the motor device 60 and the propeller 20 in the axial direction AD. The gear device 100 is sometimes referred to as a gearbox. The gear device 100 is formed in a short cylindrical shape as a whole and extends in the axial direction AD. The gear device 100 is aligned with the motor device 60 and the inverter devices 80 in the axial direction AD. The gear device 100 is provided between the motor device 60 and the inverter devices 80 and the propeller 20 in the axial direction AD. The gear device 100 is provided coaxially with the motor device 60 and the inverter devices 80. The center line of the gear device 100 coincides with the motor axis Cm.

The gear device 100 includes gears 101, a gear shaft 102, and a gear housing 105. The gear shaft 102 extends in the axial direction AD and connects the motor shaft 65 and the propeller shaft 23. The gears 101 include a speed reducer and are provided on the gear shaft 102.

The gear housing 105 houses the gears 101. The gear housing 105 includes a gear outer peripheral wall 106 and gear facing walls 107. The gear outer peripheral wall 106 extends annularly in the circumferential direction CD. The gear outer peripheral wall 106 forms the outer peripheral surface of the gear housing 105. The gear outer peripheral wall 106 covers the gears 101 from the radially outer side. The gear facing walls 107 are arranged in a pair in the axial direction AD. The pair of gear facing walls 107 are arranged in the axial direction AD with the gears 101 therebetween. The gear outer peripheral wall 106 and the gear facing walls 107 are formed of a metal material or the like and have thermal conductivity.

In the propulsion device 15, the propeller axis Cp and the motor axis Cm extend in parallel. For example, the propeller axis Cp and the motor axis Cm coincide. In the propulsion device 15, propeller airflow Wp is generated as the propeller 20 rotates. The propeller airflow Wp is a flow of gas such as air. The propeller airflow Wp flows in the axial direction AD along the propeller axis Cp. For example, the propeller airflow Wp flows from the propeller 20 toward the EPU 50 in the axial direction AD. For the propeller 20, the rotation direction of the propeller 20 and the orientation of the propeller blades 21 are set so that the propeller airflow Wp flows from the propeller 20 toward the EPU 50. The propeller blades 21 are inclined in the circumferential direction CD with respect to the propeller axis Cp. For the propeller airflow Wp, the EPU 50 is on the downstream side of the propeller 20.

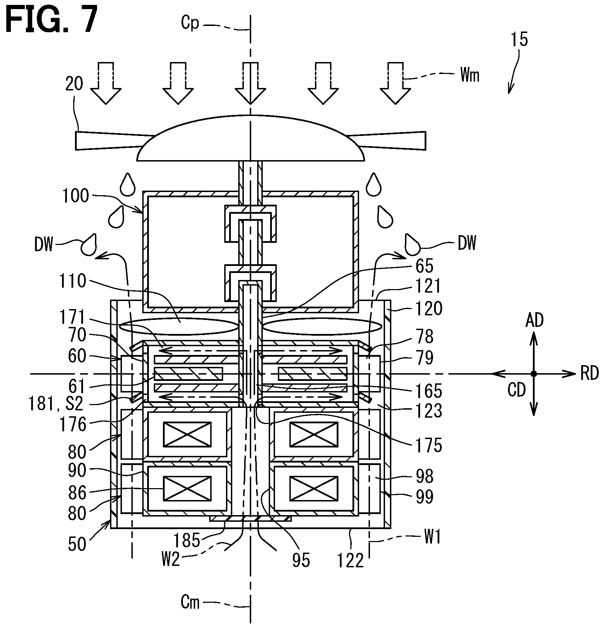

In the eVTOL 10, movement airflow Wm (see FIG. 7 and others) is generated as the eVTOL 10 moves. The movement airflow Wm is a flow of gas such as air. The movement airflow Wm flows in the traveling direction of the eVTOL 10. When the axial direction AD coincides with the traveling direction of the eVTOL 10, the movement airflow Wm flows in the axial direction AD similarly to the propeller airflow Wp.

The EPU 50 includes an outer peripheral duct 120. The outer peripheral duct 120 annularly extends in the circumferential direction CD. The outer peripheral duct 120 extends in the axial direction AD. The outer peripheral duct 120 is provided to cover the motor housing 70 and the inverter housings 90 from the outer peripheral side. The outer peripheral duct 120 is aligned with the propeller 20 in the axial direction AD. The outer peripheral duct 120 extends from the motor housing 70 and the inverter housings 90 toward both sides in the axial direction AD. The outer peripheral duct 120 is formed of a resin material. The outer peripheral duct 120 may be formed of a metal material, a rubber material, or the like.

The outer peripheral duct 120 is open to both sides in the axial direction AD. The outer peripheral duct 120 includes a first duct opening 121 and a second duct opening 122. The first duct opening 121 and the second duct opening 122 are arranged in the axial direction AD. The first duct opening 121 opens the internal space of the outer peripheral duct 120 to the propeller 20 side. The first duct opening 121 is provided between the motor housing 70 and the propeller 20 in the axial direction AD. The second duct opening 122 opens the internal space of the outer peripheral duct 120 to the side opposite to the propeller 20 in the axial direction AD. The second duct opening 122 is provided opposite to the propeller 20 across the motor housing 70 and the inverter housings 90.

The outer peripheral duct 120 forms a duct flow path 123 between the outer peripheral duct 120, and the motor housing 70 and the inverter housings 90. The duct flow path 123 is included in the EPU 50. The duct flow path 123 annularly extends in the circumferential direction CD between the housings 70 and 90 and the outer peripheral duct 120. The duct flow path 123 extends in the axial direction AD between the housings 70 and 90 and the outer peripheral duct 120. The duct flow path 123 annularly extends in the circumferential direction CD along the motor outer peripheral outer surface 76a and the inverter outer peripheral outer surfaces 96a. The duct flow path 123 extends in the axial direction AD along the outer peripheral outer surfaces 76a and 96a. The duct flow path 123 is provided outside the motor inner surface 77 and the inverter inner surfaces 97. For example, the duct flow path 123 is provided on the outer peripheral side of the motor outer peripheral inner surface 77a and the inverter outer peripheral inner surfaces 97a. The duct flow path 123 corresponds to an outer flow path.

The duct flow path 123 is open to both sides in the axial direction AD. The duct flow path 123 is open to the propeller 20 side through the first duct opening 121. The duct flow path 123 is open to the side opposite to the propeller 20 through the second duct opening 122. The duct flow path 123 is space for introducing gas into the outside of the motor housing 70. The duct flow path 123, the first duct opening 121, and the second duct opening 122 are sometimes referred to as an outer introduction part.

The duct flow path 123 includes a motor outer peripheral flow path 78 and inverter outer peripheral flow paths 98. The motor outer peripheral flow path 78 is a flow path extending in the axial direction AD and the circumferential direction CD along the motor outer peripheral outer surface 76a. The motor outer peripheral flow path 78 is space defined by the motor outer peripheral outer surface 76a and the motor fins 79. The motor outer peripheral flow path 78 extends in the axial direction AD between the pair of motor facing outer surfaces 76b. The motor outer peripheral flow path 78 includes space between two of the motor fins 79 adjacent to each other in the circumferential direction CD. The thickness dimension of the motor outer peripheral flow path 78 in the radial direction RD is the same as the projection dimension of the motor fins 79 from the motor outer peripheral outer surface 76a.

The motor outer peripheral flow path 78 is provided outside the motor inner surface 77. For example, the motor outer peripheral flow path 78 is provided on the outer peripheral side of the motor outer peripheral inner surface 77a. The motor outer peripheral flow path 78 corresponds to an outer flow path. Similarly to the duct flow path 123, the motor outer peripheral flow path 78 is space for introducing gas into the outside of the motor housing 70. The motor outer peripheral flow path 78 is sometimes referred to as an outer introduction part.

Each inverter outer peripheral flow path 98 is a flow path extending in the axial direction AD and the circumferential direction CD along the inverter outer peripheral outer surface 96a. The inverter outer peripheral flow path 98 is a space defined by the inverter outer peripheral outer surface 96a and the inverter fins 99. The inverter outer peripheral flow path 98 extends in the axial direction AD between the pair of inverter facing walls 93. The inverter outer peripheral flow path 98 includes space between two of the inverter fins 99 adjacent to each other in the circumferential direction CD. The thickness dimension of the inverter outer peripheral flow path 98 in the radial direction RD is the same as the projection dimension of the inverter fins 99 from the inverter outer peripheral outer surface 96a.

The outer peripheral duct 120 is in contact with the distal ends of the motor fins 79 and the distal ends of the inverter fins 99. Thus, the thickness dimension of the duct flow path 123 in the radial direction RD is the same as the thickness dimension of the outer peripheral flow paths 78 and 98. That is, the motor outer peripheral flow path 78 and the inverter outer peripheral flow paths 98 are flow paths substantially coinciding with the duct flow path 123.

The outer peripheral duct 120 may be located away from the distal ends of the motor fins 79 and the distal ends of the inverter fins 99 toward the outer periphery. In this configuration, the thickness dimension of the duct flow path 123 is larger than the thickness dimension of the outer peripheral flow paths 78 and 98 in the radial direction RD. That is, in this configuration, the duct flow path 123 extends toward the outer periphery beyond the outer peripheral flow paths 78 and 98.

The EPU 50 includes a reverse-flow fan 110. The reverse-flow fan 110 rotates about the motor axis Cm. The reverse-flow fan 110 is provided coaxially with the propeller 20. The reverse-flow fan 110 causes gas to flow in the axial direction AD as the motor 61 is driven. The reverse-flow fan 110 is accommodated in the outer peripheral duct 120. The reverse-flow fan 110 is provided between the motor housing 70 and the gear housing 105 in the axial direction AD.

The reverse-flow fan 110 is provided on the motor shaft 65. Thus, the reverse-flow fan 110 is provided coaxially with the motor shaft 65. The reverse-flow fan 110 rotates with the motor shaft 65. Thus, the reverse-flow fan 110 rotates in synchronization with the rotation of the motor 61. The reverse-flow fan 110 includes reverse-flow blades 111. The reverse-flow blades 111 are provided on the motor shaft 65. The reverse-flow blades 111 extend radially outward from the motor shaft 65. The reverse-flow blades 111 are arranged in the circumferential direction CD. The reverse-flow blades 111 are connected by the motor shaft 65.

The reverse-flow fan 110 causes gas to flow in a direction opposite to that of the propeller 20 in the axial direction AD. In the propulsion device 15, reverse outer peripheral airflow W1 is generated as the reverse-flow fan 110 rotates. The reverse outer peripheral airflow W1 is a flow of gas such as outside air. The reverse outer peripheral airflow W1 flows through the duct flow path 123 in the axial direction AD along the motor axis Cm. The reverse outer peripheral airflow W1 flows in a direction opposite to that of the propeller airflow Wp in the axial direction AD. For example, the reverse outer peripheral airflow W1 flows from the EPU 50 toward the propeller 20 in the axial direction AD. The reverse outer peripheral airflow W1 flows into the duct flow path 123 through the second duct opening 122 and flows out of the outer peripheral duct 120 through the first duct opening 121. The reverse outer peripheral airflow W1 passes through the duct flow path 123 in the axial direction AD, thus passing through the outer peripheral flow paths 78 and 98 in the axial direction AD. The reverse outer peripheral airflow W1 is fresh air newly taken into the duct flow path 123 from the outside of the EPU 50.

For the reverse-flow fan 110, the rotation direction of the reverse-flow fan 110 and the orientation of the reverse-flow blades 111 are set so that the reverse outer peripheral airflow W1 flows in a direction opposite to that of the propeller airflow Wp. For example, in the reverse-flow fan 110, the rotation direction of the reverse-flow fan 110 is the same as the rotation direction of the propeller 20, while the orientation of the reverse-flow blades 111 is opposite to the orientation of the propeller blades 21. In the reverse-flow fan 110, the direction in which the reverse-flow blades 111 are inclined in the circumferential direction CD with respect to the motor axis Cm is opposite to the direction in which the propeller blades 21 are inclined in the circumferential direction CD with respect to the motor axis Cm. For the reverse outer peripheral airflow W1, the EPU 50 is on the upstream side of the propeller 20.

In the motor device 60, gas flows through the motor space 171. Reverse internal airflow W2 flows through the motor space 171 as the reverse-flow fan 110 rotates. The reverse internal airflow W2 is a flow of gas such as outside air. The reverse internal airflow W2 flows through the motor space 171, thereby being able to release the heat of the motor 61 and the like to the outside of the motor device 60. The reverse internal airflow W2 is fresh air newly taken into the motor space 171 from the outside of the EPU 50.

The motor housing 70 includes a motor inlet opening 175 and motor outlet openings 176. The motor inlet opening 175 is an opening to allow gas to flow into the motor space 171. For example, the reverse internal airflow W2 flows into the motor space 171 through the motor inlet opening 175. The motor inlet opening 175 passes through the motor outer wall 74 so as to open the motor space 171 to the outside of the motor housing 70. The motor inlet opening 175 opens the motor space 171 to the downstream side of the propeller airflow Wp. The motor inlet opening 175 corresponds to a housing inlet opening. The motor space 171 is a space for introducing gas into the motor housing 70. The motor space 171, the motor inlet opening 175, and the motor outlet openings 176 are sometimes referred to as an inner introduction part.

For the propeller airflow Wp, the second motor facing wall 73b is provided downstream of the first motor facing wall 73a. The motor inlet opening 175 is provided in the second motor facing wall 73b. The motor inlet opening 175 passes through the first motor facing wall 73a in the axial direction AD. The motor inlet opening 175 is extended between the motor facing outer surface 76b and the motor facing inner surface 77b in the first motor facing wall 73a.

The motor inlet opening 175 is provided in the center of the first motor facing wall 73a. The motor inlet opening 175 is located away from the motor outer peripheral outer surface 76a and the duct flow path 123 toward the inner periphery. The motor inlet opening 175 is located away from the motor outer peripheral wall 71 toward the inner periphery. That is, the motor inlet opening 175 is located away from the motor outlet openings 176 toward the inner periphery in the radial direction RD. The motor inlet opening 175 is located closer to the motor axis Cm than the motor outer peripheral outer surface 76a in the radial direction RD. That is, in the radial direction RD, the distance between the motor inlet opening 175 and the motor axis Cm is smaller than the distance between each motor outlet opening 176 and the motor axis Cm.

The motor outlet openings 176 are openings to allow gas to flow out of the motor space 171 into the outside of the motor housing 70. For example, the reverse internal airflow W2 flows out of the motor space 171 through the motor outlet openings 176. The motor outlet openings 176 pass through the motor outer wall 74 so as to open the motor space 171 to the outside of the motor housing 70. The motor outlet openings 176 open the motor space 171 to the duct flow path 123. The motor outlet openings 176 connect the motor space 171 and the duct flow path 123 to allow ventilation. The motor outlet openings 176 correspond to housing outlet openings. The motor outlet openings 176 are also discharge openings to discharge the heat of the motor 61 to the outside.

The reverse-flow fan 110 creates an airflow that causes the reverse internal airflow W2 to flow out of the motor space 171 through the motor outlet openings 176 into the duct flow path 123. The reverse-flow fan 110 creates an airflow that causes gas to flow. The reverse-flow fan 110 corresponds to an air-blowing fan. The outer peripheral duct 120 covers the motor outlet openings 176 from the outside so that the motor outlet openings 176 are not exposed to the outer peripheral side. The outer peripheral duct 120 corresponds to an outer duct.

The motor outlet openings 176 are provided in the motor outer peripheral wall 71. The motor outlet openings 176 pass through the motor outer peripheral wall 71 in the radial direction RD. The motor outlet openings 176 are extended between the motor outer peripheral outer surface 76a and the motor outer peripheral inner surface 77a in the motor outer peripheral wall 71. The motor outlet openings 176 are arranged in the circumferential direction CD (see FIG. 4). The motor outlet openings 176 are aligned with the motor fins 79 in the axial direction AD. The motor outlet openings 176 are arranged in the axial direction AD. The motor fins 79 are provided between two of the motor outlet openings 176 adjacent to each other in the axial direction AD.

As illustrated in FIGS. 3 and 5, the motor device 60 includes motor seals 181. The motor seals 181 are provided to the motor housing 70 so as to be able to open and close the motor outlet openings 176. The motor seals 181 are formed by valve members, opening and closing members, lip seals, or the like. The motor seals 181 are individually provided to the corresponding motor outlet openings 176. Similarly to the motor outlet openings 176, the motor seals 181 are arranged in the circumferential direction CD (see FIG. 4).

The motor seals 181 can transition between a closed state S1 in which the motor outlet openings 176 are closed and an open state S2 in which the motor outlet openings 176 are open. When in the closed state S1, the motor seals 181 restrict ventilation through the motor outlet openings 176. In this case, the motor seals 181 restrict outflow of the reverse internal airflow W2 through the motor outlet openings 176 into the duct flow path 123. The closed state S1 of the motor seals 181 corresponds to a restriction state. The motor seals 181 correspond to outflow restriction parts.

When in the open state S2, the motor seals 181 open the motor outlet openings 176 to allow ventilation through the motor outlet openings 176. In this case, the motor seals 181 allow the reverse internal airflow W2 to flow out through the motor outlet openings 176 into the duct flow path 123. The open state S2 of the motor seals 181 corresponds to an allowance state.

The motor seals 181 are formed of a resin material, a rubber material, or the like so as to be elastically deformable. The motor seals 181 have a ventilation blocking property to block ventilation. The motor seals 181 cover the motor outlet openings 176 from the duct flow path 123 side. The motor seals 181 are fixed to the motor outer wall 74 in a state capable of transitioning between the closed state S1 and the open state S2. The motor seals 181 extend along the motor outer surface 76 so as to cover the motor outlet openings 176.

Each motor seal 181 includes a first seal end 181a and a second seal end 181b (see FIG. 4). Of a pair of ends of each motor seal 181 arranged in the axial direction AD, the end on the propeller 20 side is the first seal end 181a, and the end on the side opposite to the propeller 20 is the second seal end 181b. The first seal end 181a is a fixed end fixed to the motor outer wall 74. The second seal end 181b is a free end not fixed to the motor outer wall 74. When the second seal end 181b is elastically deformed to be separated from the motor outer surface 76 toward the outer periphery, the motor seal 181 transitions from the closed state S1 to the open state S2. The motor seals 181 correspond to elastic restriction parts.

When the reverse outer peripheral airflow W1 and the reverse internal airflow W2 apply external forces to the motor seals 181, the motor seals 181 are elastically deformed to transition from the closed state S1 to the open state S2. For example, when the reverse internal airflow W2 pushes the motor seals 181 toward the outer peripheral side, the motor seals 181 transition from the closed state S1 to the open state S2 due to the pressing force of the reverse internal airflow W2. When the pressing force of the reverse internal airflow W2 becomes smaller than the restoring force of the motor seals 181, the motor seals 181 transition from the open state S2 to the closed state S1 due to their own restoring force.

In the motor housing 70, when the internal pressure becomes higher than the external pressure to the extent of elastically deforming the motor seals 181, the motor seals 181 transition from the closed state S1 to the open state S2 due to the internal pressure. The internal pressure is the pressure of gas in the motor space 171. The external pressure is the pressure of gas in the duct flow path 123. When the internal pressure decreases to the extent that the motor seals 181 can exert the restoring force, the motor seals 181 transition from the open state S2 to the closed state S1 due to their own restoring force.

When the flow of the reverse outer peripheral airflow W1 is strong, force with which the reverse outer peripheral airflow W1 draws the motor seals 181 toward the duct flow path 123 acts on the motor seals 181, so that the motor seals 181 transition from the closed state S1 to the open state S2. In this case, the reverse outer peripheral airflow W1 tends to draw gas in the motor space 171 out through the motor outlet openings 176 as the reverse internal airflow W2. The strength of the reverse outer peripheral airflow W1 is defined by the volume, speed, and the like of the reverse outer peripheral airflow W1. Examples of cases where the flow of the reverse outer peripheral airflow W1 is strong include a case where the volume and speed of the reverse outer peripheral airflow W1 are high enough for the motor seals 181 to transition from the closed state S1 to the open state S2. When the flow of the reverse outer peripheral airflow W1 becomes weak, the motor seals 181 transition from the open state S2 to the closed state S1 due to their own restoring force.

When the flow of the reverse outer peripheral airflow W1 is strong, the reverse outer peripheral airflow W1 turns the motor seals 181, raising the second seal ends 181b off the motor outer surface 76, so that the motor seals 181 transition from the closed state S1 to the open state S2. Also in this case, the reverse outer peripheral airflow W1 draws the reverse internal airflow W2 out through the motor outlet openings 176, so that the reverse internal airflow W2 flows.

In the EPU 50, the reverse internal airflow W2 flows from the motor inlet opening 175 through the internal space of the motor shaft 65 into the motor space 171. The motor shaft 65 is formed in a tubular shape as a whole. The motor shaft 65 includes a shaft space 165. The shaft space 165 is the internal space of the motor shaft 65. The motor space 171 is open to the outside of the EPU 50 through the shaft space 165.

As illustrated in FIG. 5, the motor shaft 65 is formed in a tubular shape as a whole. The motor shaft 65 includes a shaft outer wall 161 and a shaft flange 162. The shaft outer wall 161 is the outer wall of the motor shaft 65. The shaft outer wall 161 forms the outer surface and the inner surface of the motor shaft 65. The shaft outer wall 161 forms the shaft space 165. The shaft outer wall 161 extends in a wall shape along the outer surface and the inner surface of the motor shaft 65.

The shaft outer wall 161 includes a shaft outer peripheral wall 161a and a shaft end wall 161b. The shaft outer peripheral wall 161a is the outer peripheral wall of the motor shaft 65. The shaft outer peripheral wall 161a is a portion extending in a direction orthogonal to the radial direction RD in the shaft outer wall 161. The shaft outer wall 161 is formed in a tubular shape. The shaft outer wall 161 extends in the axial direction AD along the motor axis Cm. The shaft end wall 161b is an end wall of the motor shaft 65. The shaft end wall 161b forms an end face of the motor shaft 65. The shaft end wall 161b extends in a direction orthogonal to the axial direction AD. Of a pair of ends of the motor shaft 65, the shaft end wall 161b forms the end opposite to the propeller 20.

The shaft flange 162 extends from the shaft outer wall 161 toward the outer peripheral side. The shaft flange 162 is provided on the shaft outer peripheral wall 161a. The shaft flange 162 extends in the circumferential direction CD along the shaft outer peripheral wall 161a. The shaft flange 162 supports the motor rotors 64. The shaft flange 162 is fixed to the motor rotors 64 with fasteners such as bolts. The shaft flange 162 is provided in the motor space 171.

The motor shaft 65 passes through the motor housing 70 in the axial direction AD. On the motor shaft 65, the reverse-flow fan 110 is provided on a portion extending from the motor housing 70 toward the propeller 20. Of the motor shaft 65, at least the shaft end wall 161b is exposed to the outside of the motor housing 70 through the motor inlet opening 175. For example, of the motor shaft 65, the shaft outer wall 161 is fitted in the motor inlet opening 175. Of the shaft outer wall 161, the shaft end wall 161b blocks the motor inlet opening 175. The shaft end wall 161b corresponds to a shaft exposed portion. The shaft outer peripheral wall 161a extends from the shaft end wall 161b in the axial direction AD. The shaft outer peripheral wall 161a corresponds to a shaft extended portion.

The motor shaft 65 includes a shaft inlet opening 166 and shaft outlet openings 167. The shaft inlet opening 166 and the shaft outlet openings 167 are provided in the shaft outer wall 161. The shaft inlet opening 166 is provided in the shaft end wall 161b. The shaft inlet opening 166 passes through the shaft end wall 161b in the axial direction AD. The shaft inlet opening 166 is provided in a portion of the motor outer wall 74 exposed to the outside of the motor housing 70. The shaft inlet opening 166 opens the shaft space 165 to the outside of the motor housing 70. Gas flowing into the shaft space 165 through the shaft inlet opening 166 flows into the motor space 171 through the motor inlet opening 175. The motor inlet opening 175 indirectly opens the motor space 171 to the downstream side of the propeller airflow Wp through the shaft space 165.

The shaft inlet opening 166 and the motor inlet opening 175 are open to the outside of the EPU 50 through the inverter housing hole 95. The shaft inlet opening 166 and the motor inlet opening 175 are aligned with the inverter housing hole 95 in the axial direction AD. The shaft inlet opening 166 connects the internal space of the inverter housing hole 95 and the shaft space 165 to allow ventilation. The reverse internal airflow W2 that has passed through the inverter housing hole 95 flows through the shaft inlet opening 166 into the shaft space 165. The motor inlet opening 175 connects the internal space of the inverter housing hole 95 and the motor space 171 to allow ventilation. The reverse internal airflow W2 that has passed through the inverter housing hole 95 flows through the motor inlet opening 175 into the motor space 171.

The shaft outer wall 161 may or need not project from the second motor facing wall 73b in the axial direction AD. In a configuration in which the shaft outer wall 161 projects from the second motor facing wall 73b in the axial direction AD, the shaft inlet opening 166 may be provided in at least one of the shaft outer peripheral wall 161a and the shaft end wall 161b.

The shaft outlet openings 167 are provided in the shaft outer peripheral wall 161a. The shaft outlet openings 167 pass through the shaft outer peripheral wall 161a in the radial direction RD. The shaft outlet openings 167 are provided in portions of the motor outer wall 74 accommodated in the motor space 171. The shaft outlet openings 167 open the shaft space 165 to the motor space 171. That is, the shaft outlet openings 167 connect the shaft space 165 and the motor space 171 to allow ventilation. The shaft outlet openings 167 are arranged in the circumferential direction CD. The shaft outlet openings 167 are arranged in the axial direction AD. For example, the shaft outlet openings 167 are provided in each of a portion of the shaft outer peripheral wall 161a closer to the first motor facing wall 73a than the shaft flange 162 and a portion closer to the second motor facing wall 73b than the shaft flange 162. The reverse internal airflow W2 flowing into the shaft space 165 through the shaft inlet opening 166 flows out into the motor space 171 through the shaft outlet openings 167.

As illustrated in FIG. 3, the EPU 50 includes an air filter 185. The air filter 185 can remove foreign matter such as water, dust, and particles from gas while allowing the gas to pass therethrough. For example, the air filter 185 allows the reverse internal airflow W2 to flow into the motor space 171 through the motor inlet opening 175 while restricting entry of foreign matter into the motor space 171 through the motor inlet opening 175 along with the reverse internal airflow W2. The air filter 185 is formed in a sheet form with a filter member such as a nonwoven fabric. The air filter 185 corresponds to a foreign matter restriction part. The air filter 185 is sometimes referred to as a dustproof filter.

The air filter 185 is provided to cover the motor inlet opening 175 and the shaft inlet opening 166 from the axial direction AD. For example, the air filter 185 covers the motor inlet opening 175 from the axial direction AD with the inverter housing hole 95 therebetween. The air filter 185 is provided to one of the inverter housings 90 to cover the inverter housing hole 95 from the side opposite to the propeller 20. The air filter 185 is fixed to the inverter facing wall 93 with an adhesive or the like. The air filter 185 extends in a direction orthogonal to the axial direction AD.

As illustrated in FIG. 5, the motor 61 includes axial gaps 67. The axial gaps 67 are gaps between the motor stator 62 and the motor rotors 64. The axial gaps 67 include gaps between the rotor magnets 149 and the stator coil 62a. The rotor magnets 149 and the stator coil 62a are arranged in the axial direction AD.

The motor stator 62 includes a coil protection part 62b. The coil protection part 62b protects the stator coil 62a. The coil protection part 62b is formed of a resin material or the like and has electrical insulation. The coil protection part 62b covers at least part of the stator coil 62a. The coil protection part 62b fixes the stator coil 62a to the motor housing 70. The coil protection part 62b extends in the circumferential direction CD along the motor outer peripheral inner surface 77a. The coil protection part 62b is fixed to the motor outer peripheral inner surface 77a.

The motor rotors 64 include a magnet holder 140. The magnet holder 140 supports the rotor magnets 149. At least portions of the rotor magnets 149 are aligned with the stator coil 62a in the axial direction AD with the axial gaps 67 therebetween. The magnet holder 140 is formed of a metal material or the like. The magnet holder 140 may be formed of a resin material or the like. The magnet holder 140 extends in a direction orthogonal to the axial direction AD as a whole. The magnet holder 140 extends annularly in the circumferential direction CD as a whole.

The magnet holder 140 includes holder facing portions 141, a holder extended portion 142, holder intervening portions 143, and holder ribs 144. The holder facing portions 141 are provided in positions facing the motor stator 62. At least portions of the holder facing portions 141 are aligned with the motor stator 62 in the axial direction AD. The holder facing portions 141 cover the rotor magnets 149 from the sides opposite to the stator coil 62a. The holder facing portions 141 annularly extend in the circumferential direction CD.

The holder intervening portions 143 are provided between the holder facing portions 141 and the holder extended portion 142. The holder intervening portions 143 connect the holder facing portions 141 and the holder extended portion 142. The holder intervening portions 143 are arranged in the circumferential direction CD. A space that allows ventilation is formed between two of the holder intervening portions 143 adjacent to each other in the circumferential direction CD.

The holder extended portion 142 extends from the holder facing portions 141 toward the inner peripheral side. The holder extended portion 142 is fixed to the shaft flange 162 with bolts or the like. For example, the holder extended portion 142 is placed on the shaft flange 162 in the axial direction AD. The holder extended portion 142 annularly extends in the circumferential direction CD.

The holder ribs 144 are ribs provided on the holder facing portions 141. The holder ribs 144 project in the axial direction AD from the holder facing portions 141 toward the sides opposite to the rotor magnets 149. The holder ribs 144 extend in the radial direction RD along the holder facing portions 141. At least portions of the holder ribs 144 are aligned with the rotor magnets 149 in the axial direction AD. The holder ribs 144 are arranged in the circumferential direction CD (see FIG. 4). The holder ribs 144 are provided on the inner peripheral side of the motor outlet openings 176 in the motor space 171. At least portions of the holder ribs 144 are aligned with the motor outlet openings 176 in the radial direction RD.

When the motor 61 is driven, the holder ribs 144 move in the circumferential direction CD with the rotation of the motor rotors 64. In this case, the holder ribs 144 creates an airflow in directions orthogonal to the circumferential direction CD. That is, the motor rotors 64 creates an airflow that causes gas to flow in the motor space 171. In the motor space 171, gas blown by the holder ribs 144 easily flows out through the motor outlet openings 176 into the duct flow path 123. For example, the motor rotors 64 creates an airflow that causes the reverse internal airflow W2 flowing into the motor space 171 through the motor inlet opening 175 to flow out through the motor outlet openings 176 into the duct flow path 123. The motor rotors 64 correspond to air-blowing fans. The holder ribs 144 correspond to rotor blades. The magnet holder 140 including the holder ribs 144 thus has a blower shape.

In the motor device 60, the shaft outlet openings 167 are on the inner peripheral side of the motor outlet openings 176 with the holder ribs 144 therebetween. In the motor device 60, the reverse internal airflow W2 flowing into the motor space 171 through the shaft outlet openings 167 travels toward the outer peripheral side due to blowing by the holder ribs 144 and the like, and thus easily reaches the motor outlet openings 176. The reverse internal airflow W2 flows toward the outer peripheral side along the holder ribs 144 between the holder facing portions 141 and the motor facing walls 73a and 73b. In the motor space 171, the reverse internal airflow W2 also flows through the axial gaps 67. After flowing into the motor space 171 through the shaft outlet openings 167, the reverse internal airflow W2 reaches the axial gaps 67 through the space between the holder intervening portions 143 adjacent to each other in the circumferential direction CD, and passes through the axial gaps 67 toward the outer peripheral side.

The motor device 60 includes a dehumidification part 69. The dehumidification part 69 is provided inside the motor housing 70. The dehumidification part 69 is formed of a material such as zeolite or silica gel, and has a dehumidifying function. The dehumidification part 69 can remove water and moisture in the motor space 171. The dehumidification part 69 can prevent dew condensation from occurring inside the motor housing 70. The dehumidification part 69 is fixed to the motor inner surface 77 or the like.

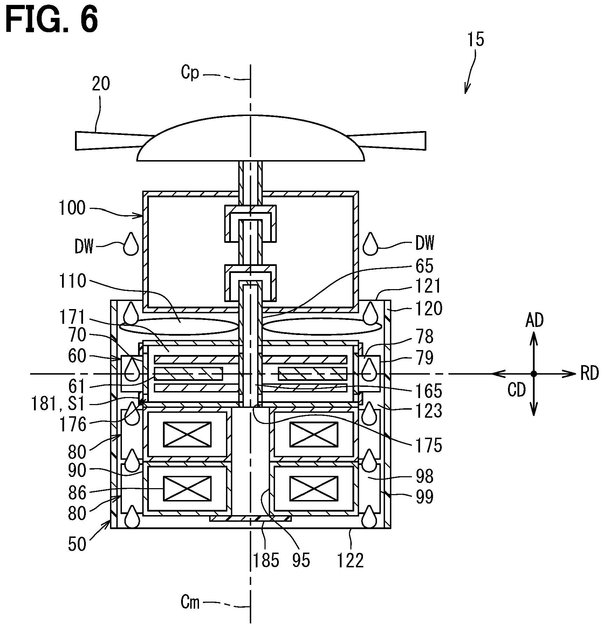

Next, the relationship between the drive state of the propulsion device 15 and the behavior of foreign matter will be described. Here, water droplets DW are assumed as foreign matter. In FIG. 6, assume a case where the eVTOL 10 is in a first situation. In the first situation, the angle of the propulsion device 15 is a lift angle, and the drive of the propulsion device 15 is stopped. Thus, the propeller airflow Wp is not generated in the first situation. In the first situation, since the eVTOL 10 is not moved, the movement airflow Wm is also not generated. The lift angle is an angle for the propulsion device 15 to lift the eVTOL 10. At the lift angle, the propeller axis Cp extends in the up-and-down direction. Examples of cases where the eVTOL 10 is not moved include a case where the eVTOL 10 is on the ground and a case where the eVTOL 10 is hovering.

In the first situation, since the propulsion device 15 is not driven, the reverse-flow fan 110 is not rotated, and the reverse outer peripheral airflow W1 and the reverse internal airflow W2 are not generated. Consequently, the motor seals 181 are in the closed state S1. Assume a case where in the first situation, water droplets DW such as rainwater fall toward the propulsion device 15. In this case, even when water droplets DW enter the duct flow path 123 through the first duct opening 121, entry of the water droplets DW into the motor space 171 through the motor outlet openings 176 is restricted by the motor seals 181.

In FIG. 7, assume a case where the eVTOL 10 is in a second situation. In the second situation, the angle of the propulsion device 15 is the lift angle and the propulsion device 15 is being driven. In the second situation, while the propeller airflow Wp flows downward, the reverse outer peripheral airflow W1 flows upward. The reverse internal airflow W2 is generated by being drawn by the reverse outer peripheral airflow W1. In the second situation, the eVTOL 10 is lifted upward in vertical takeoff or the like. Thus, in the second situation, the movement airflow Wm flows downward similarly to the propeller airflow Wp. In FIG. 7, the propeller airflow Wp is not illustrated.

In the second situation, even when water droplets DW flow down toward the first duct opening 121 along with the propeller airflow Wp, the reverse outer peripheral airflow W1 prevents the water droplets DW from entering the first duct opening 121. For example, the water droplets DW flowing down toward the first duct opening 121 are repelled by the reverse outer peripheral airflow W1 blown upward through the first duct opening 121. Thus, even when the motor seals 181 transition to the open state S2 due to the reverse outer peripheral airflow W1, the water droplets DW are unlikely to enter the motor space 171 through the motor outlet openings 176. Similarly to the reverse outer peripheral airflow W1, the reverse internal airflow W2 flows upward, passing through the air filter 185, and flows into the motor space 171 through the motor inlet opening 175.

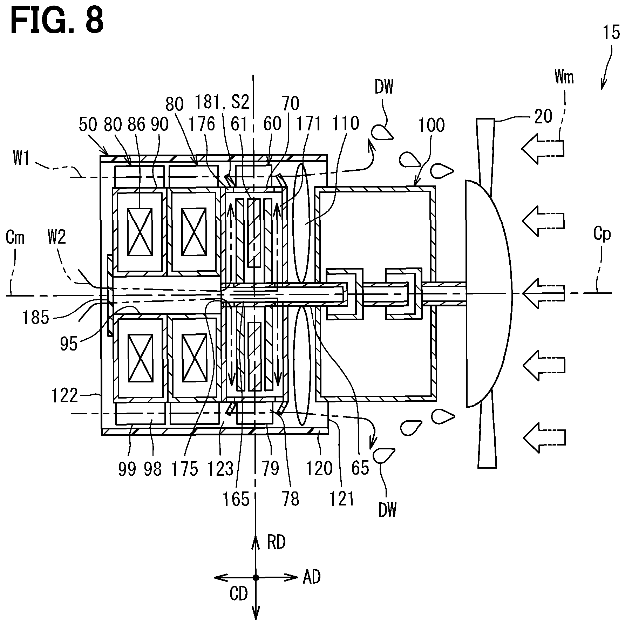

In FIG. 8, assume a case where the eVTOL 10 is in a third situation. In the third situation, the angle of the propulsion device 15 is a cruise angle, and the propulsion device 15 is being driven. Thus, in the third situation, the propeller airflow Wp and the reverse outer peripheral airflow W1 flow in opposite horizontal directions. The cruise angle is an angle for the propulsion device 15 to cause the eVTOL 10 to cruise. At the cruise angle, the propeller axis Cp extends in the horizontal direction. In FIG. 8, the propeller airflow Wp is not illustrated. Also in the third situation, the reverse internal airflow W2 is generated by being drawn by the reverse outer peripheral airflow W1. In the third situation, the eVTOL 10 is moving toward the propeller 20 side. Consequently, in the third situation, the movement airflow Wm flows in the same horizontal direction as the propeller airflow Wp. Examples of cases where the eVTOL 10 is moving include a case where the eVTOL 10 is cruising and a case where the eVTOL 10 is moving on the ground. The movement airflow Wm generated as the eVTOL 10 cruises is sometimes referred to as cruise airflow.

In the third situation, even when water droplets DW fly in the horizontal direction toward the first duct opening 121 along with the propeller airflow Wp and the movement airflow Wm, as in the second situation, the reverse outer peripheral airflow W1 prevents the water droplets DW from entering the first duct opening 121. In the third situation, even when the angle of the propulsion device 15 is the cruise angle, the reverse outer peripheral airflow W1 causes the motor seals 181 to transition to the open state S2 against gravity etc.

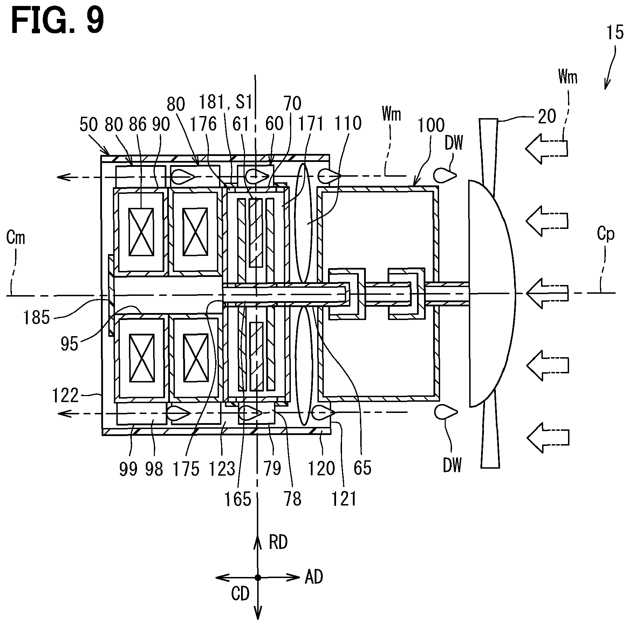

In FIG. 9, assume a case where the eVTOL 10 is in a fourth situation. In the fourth situation, the angle of the propulsion device 15 is the cruise angle, and the drive of the propulsion device 15 is stopped. Thus, in the fourth situation, the propeller airflow Wp, the reverse outer peripheral airflow W1, and the reverse internal airflow W2 are not generated. In the fourth situation, the eVTOL 10 is cruising, traveling toward the propeller 20 side. Thus, in the fourth situation, the movement airflow Wm flows in the horizontal direction.

In the fourth situation, when water droplets DW fly toward the first duct opening 121 along with the movement airflow Wm, the water droplets DW enter the duct flow path 123 through the first duct opening 121 along with the movement airflow Wm, and exit through the second duct opening 122. In the fourth situation, since the reverse outer peripheral airflow W1 is not generated, the motor seals 181 are held in the closed state S1 against gravity etc. Consequently, entry of the water droplets DW into the motor space 171 through the motor outlet openings 176 is restricted by the motor seals 181.

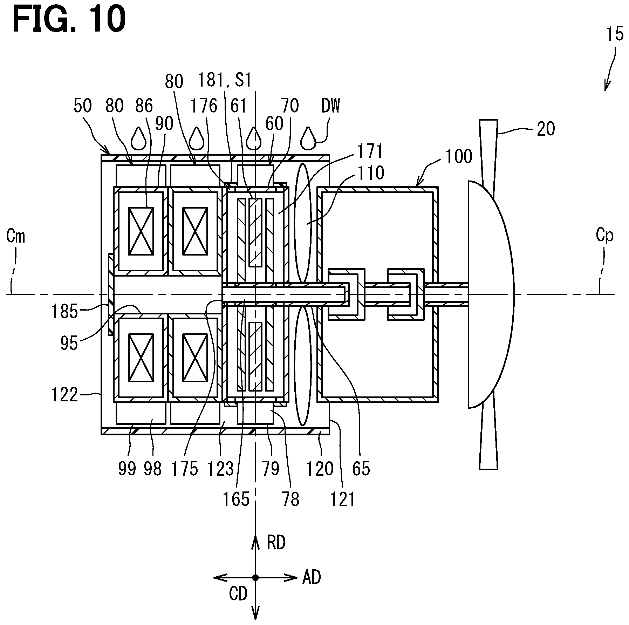

In FIG. 10, assume a case where the eVTOL 10 is in a fifth situation. In the fifth situation, the angle of the propulsion device 15 is the cruise angle, and the drive of the propulsion device 15 is stopped. In the fifth situation, the eVTOL 10 is not moved. Consequently, in the fifth situation, as in the first situation, none of the propeller airflow Wp, the movement airflow Wm, the reverse outer peripheral airflow W1, and the reverse internal airflow W2 are generated.

In the fifth situation, even when water droplets DW fall toward the EPU 50, the water droplets DW hit the outer peripheral surface of the outer peripheral duct 120. Consequently, it is unlikely that the water droplets DW enter the duct flow path 123, and the water droplets DW enter the motor space 171 through the motor outlet openings 176.

According to the present embodiment described above, the duct flow path 123 is provided outside the motor inner surface 77. In this configuration, the heat of the motor 61 is released to the duct flow path 123 through the motor housing 70. Consequently, the heat dissipation effect of the motor housing 70 can be enhanced by gas such as the reverse outer peripheral airflow W1 flowing through the duct flow path 123. Moreover, in the motor housing 70, the duct flow path 123 and the motor space 171 are connected by the motor outlet openings 176. In this configuration, the heat of the motor 61 is easily released from the motor space 171 to the duct flow path 123 through the motor outlet openings 176 along with gas such as the reverse internal airflow W2. Consequently, accumulation of heat inside the motor housing 70 can be prevented by the motor outlet openings 176 and the duct flow path 123. As described above, the heat dissipation effect of the propulsion device 15 can be enhanced by the motor outlet openings 176 and the duct flow path 123.

According to the present embodiment, the motor inlet opening 175 opens the motor space 171 to the outside of the motor housing 70. In this configuration, the reverse internal airflow W2 flows into the motor space 171 from the outside of the motor housing 70, so that the heat dissipation of the motor 61 is promoted by the reverse internal airflow W2. Thus, the heat dissipation effect of the propulsion device 15 can be enhanced by the motor inlet opening 175.

According to the present embodiment, the air filter 185 allows gas to flow into the motor inlet opening 175 while restricting entry of foreign matter into the motor space 171 through the motor inlet opening 175. In this configuration, the air filter 185 can prevent the occurrence of abnormalities in the motor 61 and others due to foreign matter entering the motor space 171 through the motor inlet opening 175. Thus, the reverse internal airflow W2 to directly cool the motor 61 can be introduced into the motor space 171 without impairing the operation of the motor 61.

According to the present embodiment, in the motor housing 70, the motor outlet openings 176 are provided in the motor outer peripheral wall 71. In this configuration, when the reverse outer peripheral airflow W1 flows in the axial direction AD along the motor outer peripheral wall 71, the reverse internal airflow W2 is easily generated because the reverse outer peripheral airflow W1 draws the reverse internal airflow W2 out through the motor outlet openings 176 into the duct flow path 123, for example. This enables a configuration in which the heat of the motor 61 is directly released to the outside through the motor outlet openings 176 along with the reverse internal airflow W2.

Moreover, in the motor housing 70, the motor inlet opening 175 is provided in the second motor facing wall 73b. In this configuration, the reverse internal airflow W2 directly flows into the motor space 171 through the motor inlet opening 175 without passing through the duct flow path 123. That is, the reverse internal airflow W2 is introduced into the motor space 171 as fresh air. This can enhance the effect of cooling the motor 61 with the reverse internal airflow W2.

In the present embodiment, the motor outlet openings 176 are provided in positions through which the motor axis Cm passes in the motor housing 70. In this configuration, the reverse internal airflow W2 flows into the center of the motor space 171. This allows the reverse internal airflow W2 to flow uniformly inside the motor housing 70. That is, the reverse internal airflow W2 easily flows through the entire motor space 171. Consequently, accumulation of heat in part of the motor space 171 can be prevented by the reverse internal airflow W2.

According to the present embodiment, the motor inlet opening 175 opens the motor space 171 to the downstream side of the propeller airflow Wp. In this configuration, the propeller airflow Wp is unlikely to flow directly into the motor inlet opening 175. This can prevent foreign matter from entering the motor space 171 through the motor inlet opening 175 along with the propeller airflow Wp.

According to the present embodiment, in the motor shaft 65, the shaft inlet opening 166 opens the shaft space 165 to the outside of the motor shaft 65, and the shaft outlet openings 167 connect the shaft space 165 and the motor space 171. In this configuration, the reverse internal airflow W2 to flow into the motor space 171 through the motor inlet opening 175 passes through the shaft space 165 and then passes through the motor space 171 and flows out through the motor outlet openings 176 into the duct flow path 123. Consequently, the heat of the motor shaft 65 is released to the outside of the motor housing 70 along with the reverse internal airflow W2. Thus, accumulation of heat inside the motor shaft 65 can be prevented by the reverse internal airflow W2.

In the present embodiment, the shaft inlet opening 166 is provided in a portion of the motor shaft 65 exposed to the outside of the motor housing 70. This enables a configuration in which the reverse internal airflow W2 that has flowed in through the shaft inlet opening 166 flows through the shaft space 165, thereby passing through the motor inlet opening 175. In this configuration, even when the motor inlet opening 175 is blocked by the motor shaft 65, the reverse internal airflow W2 is introduced into the motor space 171 through the motor inlet opening 175. Thus, there is no need to form, in the motor inlet opening 175, a gap to allow the reverse internal airflow W2 to flow into the motor space 171 between the second motor facing wall 73b and the motor shaft 65.

According to the present embodiment, the motor seals 181 can transition between the closed state S1 in which the motor outlet openings 176 are closed and the open state S2 in which the motor outlet openings 176 are open. In this configuration, when the motor seals 181 are in the open state S2, the heat of the motor space 171 can be released through the motor outlet openings 176 along with the reverse internal airflow W2. When the motor seals 181 are in the closed state S1, the motor seals 181 can restrict entry of foreign matter into the motor space 171 through the motor outlet openings 176. Thus, the motor seals 181 can achieve both the prevention of occurrence of abnormality in the motor 61 due to entry of foreign matter into the motor space 171, and the improvement of the performance of cooling the motor space 171 with the reverse internal airflow W2.

According to the present embodiment, the motor seals 181 transition from the closed state S1 to the open state S2 by being elastically deformed by the flow of the reverse outer peripheral airflow W1 in the duct flow path 123, and transition from the open state S2 to the closed state S1 by the restoring force against the flow of the reverse outer peripheral airflow W1. In this configuration, the motor seals 181 are easily opened and closed depending on the strength of the flow of the reverse outer peripheral airflow W1 etc. This enables a configuration in which the motor seals 181 are opened and closed in accordance with the drive state of the propulsion device 15, using the elastic deformation and the restoring force of the motor seals 181.

According to the present embodiment, the reverse-flow fan 110 creates an airflow that causes the reverse internal airflow W2 to flow out of the motor space 171 into the duct flow path 123 through the motor outlet openings 176. In this configuration, the reverse-flow fan 110 can forcibly cause the reverse outer peripheral airflow W1 to flow through the duct flow path 123. This allows the effect of cooling the motor housing 70 with the reverse outer peripheral airflow W1 to be exerted using the reverse-flow fan 110 without depending on the propeller airflow Wp and the movement airflow Wm.

In the present embodiment, the reverse-flow fan 110 is coaxially mounted on the motor shaft 65 so that the rotation of the reverse-flow fan 110 is synchronized with the rotation of the motor shaft 65. That is, the reverse-flow fan 110 is provided integrally with the motor shaft 65. In this configuration, it is not necessary to provide the reverse-flow fan 110 independently of the motor shaft 65. That is, it is not necessary to add, to the motor device 60, a dedicated mechanism such as a dedicated shaft for adding the reverse-flow fan 110 to the motor device 60. This can enhance the effect of cooling the motor device 60 with the reverse-flow fan 110 while reducing the weight of the motor device 60.

In the present embodiment, the reverse-flow fan 110 is provided outside the motor housing 70 so as to cause the reverse outer peripheral airflow W1 to flow. This enables a configuration in which when the reverse outer peripheral airflow W1 is generated as the reverse-flow fan 110 rotates, the reverse internal airflow W2 is also generated by being drawn by the reverse outer peripheral airflow W1. Thus, the reverse-flow fan 110 can stably cause cooling air such as the reverse outer peripheral airflow W1 and the reverse internal airflow W2 to flow through both the duct flow path 123 and the motor space 171.

According to the present embodiment, the holder ribs 144 create airflows that cause the reverse internal airflow W2 to flow out through the motor outlet openings 176 into the duct flow path 123 as the motor rotors 64 rotate. In this configuration, the reverse internal airflow W2 can be generated in the motor space 171 by using the holder ribs 144 that are parts of the motor rotors 64. Thus, by causing the motor rotors 64 to function as air-blowing fans, the heat dissipation effect of the motor device 60 can be enhanced.

In the present embodiment, the holder ribs 144 functioning as air-blowing blades for blowing air extend from the motor rotors 64 toward the sides opposite to the motor stator 62. That is, the holder ribs 144 are provided opposite to the axial gaps 67 across the rotor magnets 149. On the motor rotors 64, areas opposite to the axial gaps 67 across the rotor magnets 149 that are unlikely to contribute to the generation of motor torque are used as installation areas of the holder ribs 144. Consequently, by causing the holder ribs 144 to function as air-blowing blades while preventing the holder ribs 144 from reducing the output performance of the motor 61, the heat dissipation effect of the motor device 60 can be enhanced.

According to the present embodiment, the motor outlet openings 176 are provided on the outer peripheral side of the holder ribs 144 functioning as air-blowing blades. This configuration allows the reverse internal airflow W2 generated by the holder ribs 144 as the motor rotors 64 rotate to easily flow out through the motor outlet openings 176 into the duct flow path 123 simply by flowing from the holder ribs 144 toward the outer peripheral side. Thus, the reverse internal airflow W2 can be blown toward the motor outlet openings 176 by the holder ribs 144 to reach the motor outlet openings 176 without going around in the axial direction AD and the circumferential direction CD. This tends to reduce pressure loss for the flow of the reverse internal airflow W2 in the motor space 171. Consequently, a configuration is enabled in which the reverse internal airflow W2 is smoothly discharged into the duct flow path 123 through the motor outlet openings 176.

In this configuration, since the holder ribs 144 cause the reverse internal airflow W2 to flow toward the motor outlet openings 176, the reverse internal airflow W2 can push the motor seals 181 toward the duct flow path 123 side to open the motor seals 181. This enables a configuration in which the motor seals 181 easily transition from the closed state S1 to the open state S2 as the motor 61 is driven.

According to the present embodiment, the outer peripheral duct 120 is fitted to the motor housing 70 so as to cover the motor outlet openings 176 from the outside. In this configuration, the outer peripheral duct 120 can prevent foreign matter from reaching the motor outlet openings 176. The outer peripheral duct 120 extends toward both sides in the axial direction AD beyond the motor housing 70. In this configuration, when the angle of the propulsion device 15 becomes the cruise angle, the outer peripheral duct 120 serves as an umbrella for the motor housing 70 and the motor outlet openings 176. Thus, the outer peripheral duct 120 can more reliably prevent foreign matter from entering the motor space 171 through the motor outlet openings 176.

According to the present embodiment, the propulsion device 15 is driven to cause the eVTOL 10 to fly. In this configuration, the reverse outer peripheral airflow W1 and the reverse internal airflow W2 can prevent the temperature of the motor 61 from excessively rising due to an insufficient heat dissipation effect of the motor device 60 while the eVTOL 10 is flying by the drive of the propulsion device 15. The eVTOL 10 includes the occupant compartment 14. Thus, the reverse outer peripheral airflow W1 and the reverse internal airflow W2 can enhance the safety of the eVTOL 10 and occupants.

### <Second Embodiment>

In the first embodiment, the propeller airflow Wp flows from the propeller 20 toward the EPU 50 in the axial direction AD. In contrast, in a second embodiment, the propeller airflow Wp flows from the EPU 50 toward the propeller 20 in the axial direction AD. Configurations, functions, and effects not specifically described in the second embodiment are the same as those of the first embodiment. In the second embodiment, differences from the first embodiment will be mainly described.

In the eVTOL 10 of the present embodiment, the propellers 20 include lift propellers and cruise propellers. The lift propellers are included in the propulsion devices 15 mounted on the eVTOL 10 at the lift angle. The eVTOL 10 is capable of ascent, descent, hovering, and the like when the lift propellers are driven to rotate. The cruise propellers are included in the propulsion devices 15 mounted on the eVTOL 10 at the cruise angle. The eVTOL 10 is capable of cruise and the like when the cruise propellers are driven to rotate.

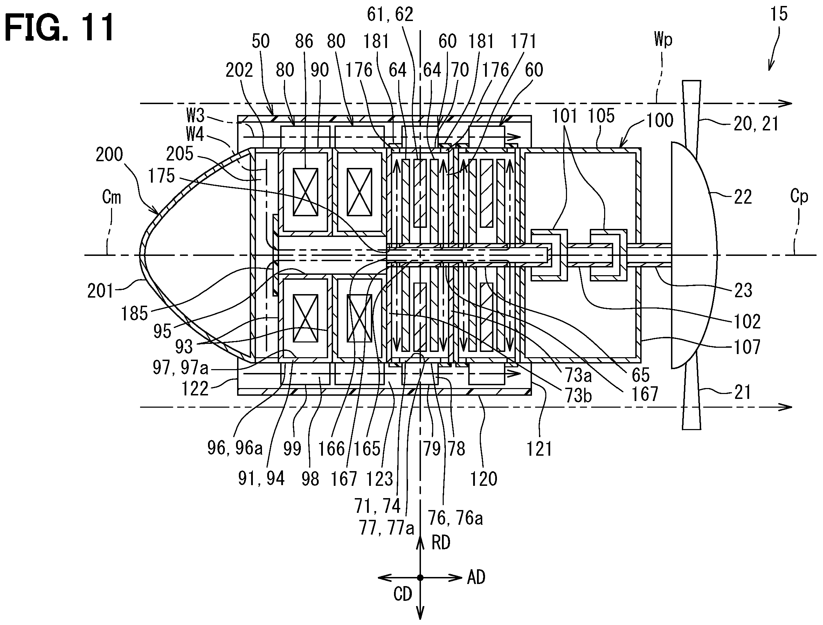

In the present embodiment, the propulsion devices 15 including the cruise propellers will be described. As illustrated in FIG. 11, for the propeller airflow Wp, the propeller 20 is on the downstream side of the EPU 50. The EPU 50 includes an EPU head 200. The EPU head 200 is provided opposite to the propeller 20 across the motor devices 60 and the inverter devices 80. The EPU head 200 is aligned with the motor devices 60 and the inverter devices 80 in the axial direction AD. The EPU head 200 covers the inverter housing hole 95 and the motor inlet opening 175 from the side opposite to the propeller 20. For the propeller airflow Wp, the EPU head 200 is on the upstream side of the motor devices 60 and the inverter devices 80. The EPU head 200 corresponds to a cover member. The EPU head 200 is sometimes referred to as a nacelle.

The EPU head 200 includes a head outer wall 201. The head outer wall 201 forms the outer and inner surfaces of the EPU head 200. The head outer wall 201 extends in a direction orthogonal to the axial direction AD as a whole. The head outer wall 201 has a shape bulging toward the side opposite to the motor devices 60. The head outer wall 201 is curved such that a central portion of the head outer wall 201 projects in the axial direction AD. The head outer wall 201 covers the inverter housing hole 95 and the motor inlet opening 175 from the axial direction AD. At least a front end portion of the head outer wall 201 is provided in a position located inside the outer peripheral duct 120. An end portion of the head outer wall 201 on the propeller 20 side is accommodated in the outer peripheral duct 120.

The head outer wall 201 is provided with head openings 202. The head openings 202 pass through the head outer wall 201 in the thickness direction of the head outer wall 201. The head openings 202 pass through, in the radial direction RD, a portion of the head outer wall 201 extending in a direction orthogonal to the radial direction RD. The head openings 202 are arranged in the circumferential direction CD. The head openings 202 are covered by the outer peripheral duct 120 from the outer peripheral side. The head openings 202 need not be covered by the outer peripheral duct 120. For example, the head openings 202 may be located away from the outer peripheral duct 120 in the axial direction AD.

The EPU head 200 includes a head flow path 205. The head flow path 205 is included in the internal space of the EPU head 200. The head flow path 205 is open to the outside of the EPU head 200 through the head openings 202. The head flow path 205 connects the head openings 202 and the inverter housing hole 95 to allow ventilation. The head flow path 205 is a gas passage. The head flow path 205 extends in the radial direction RD between the head openings 202 and the inverter housing hole 95. The head flow path 205 is located adjacent to the head outer wall 201 in the axial direction AD. The head flow path 205 may be included in the inner introduction part.

Unlike in the first embodiment, the EPU 50 does not include the reverse-flow fan 110. In the propulsion device 15, forward outer peripheral airflow W3 is generated as the propeller airflow Wp is generated. The forward outer peripheral airflow W3 is a flow of gas such as outside air. The forward outer peripheral airflow W3 passes through the duct flow path 123 in the axial direction AD. The forward outer peripheral airflow W3 flows in the same direction as the propeller airflow Wp in the axial direction AD. Of the propeller airflow Wp and the movement airflow Wm, the forward outer peripheral airflow W3 is airflow flowing through the duct flow path 123. The forward outer peripheral airflow W3 flows into the duct flow path 123 through the second duct opening 122 and flows out through the first duct opening 121.

In the motor devices 60, forward internal airflow W4 may be generated as the forward outer peripheral airflow W3 is generated. The forward internal airflow W4 flows into the head flow path 205 through the head openings 202, and flows into the motor spaces 171 through the air filter 185, the inverter housing hole 95, and the shaft space 165. Then, the forward internal airflow W4 flows out of the motor spaces 171 into the duct flow path 123 through the motor outlet openings 176. The forward internal airflow W4 is generated by the propeller airflow Wp and the forward outer peripheral airflow W3, and flows through the motor spaces 171.

Unlike in the first embodiment, the EPU 50 includes a plurality of motor devices 60. The motor devices 60 are arranged in the axial direction AD. For example, the motor devices 60 are provided between the inverter devices 80 and the propeller 20.

In the present embodiment, the motor devices 60 and the gear device 100 are located adjacent to each other in the axial direction AD without the reverse-flow fan 110 interposed therebetween. The first motor facing wall 73a of the motor housing 70 is placed on one of the gear facing walls 107. When the forward internal airflow W4 flows through the motor space 171, the forward internal airflow W4 flows toward the outer peripheral side between the holder facing portion 141 and the first motor facing wall 73a, thereby flowing toward the outer peripheral side along the gear facing wall 107 with the first motor facing wall 73a therebetween.

In the motor device 60, the heat of the gear device 100 is easily released through the first motor facing wall 73a to the forward internal airflow W4 flowing between the motor rotor 64 and the first motor facing wall 73a. In particular, the forward internal airflow W4 flowing out into the motor space 171 through the shaft outlet openings 167 located between the motor rotor 64 and the first motor facing wall 73a in the axial direction AD is considered to flow out into the motor space 171 with a relatively small amount of heat applied thereto from the motor shaft 65. Consequently, since the forward internal airflow W4 flows through the shaft space 165, the forward internal airflow W4 is likely to reach the space between the motor rotor 64 and the first motor facing wall 73a with a relatively high cooling effect. Thus, the gear facing wall 107 can be cooled by the forward internal airflow W4 with a relatively high cooling effect through the first motor facing wall 73a. That is, the forward internal airflow W4 can cool the gear device 100 through the first motor facing wall 73a.

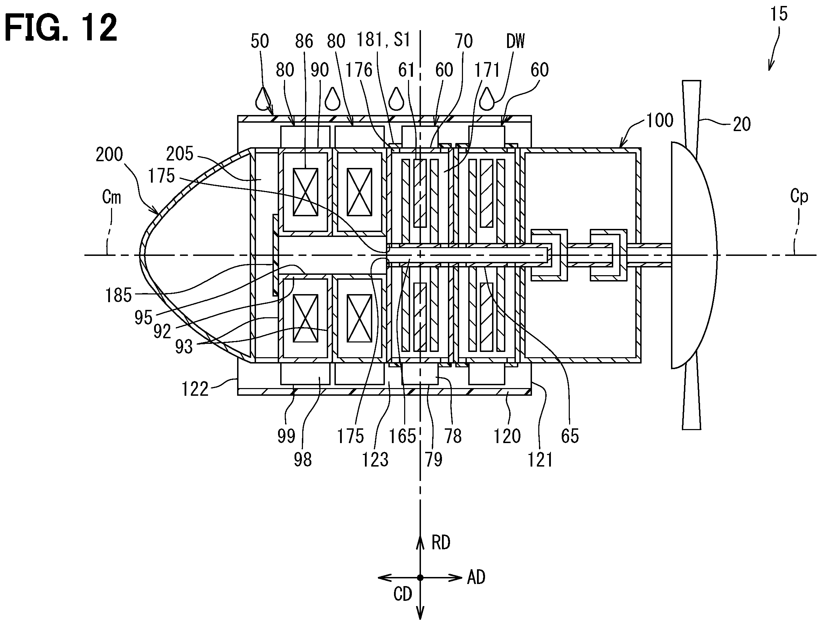

In FIG. 12, assume a case where the eVTOL 10 is in a sixth situation. In the sixth situation, the drive of the propulsion device 15 for cruise is stopped. In the sixth situation, the eVTOL 10 is not moved. Thus, in the sixth situation, the propeller airflow Wp, the movement airflow Wm, the forward outer peripheral airflow W3, and the forward internal airflow W4 are not generated. In the sixth situation, even when water droplets DW fall toward the eVTOL 10, entry of the water droplets DW into the motor spaces 171 through the motor outlet openings 176 is restricted by the outer peripheral duct 120.

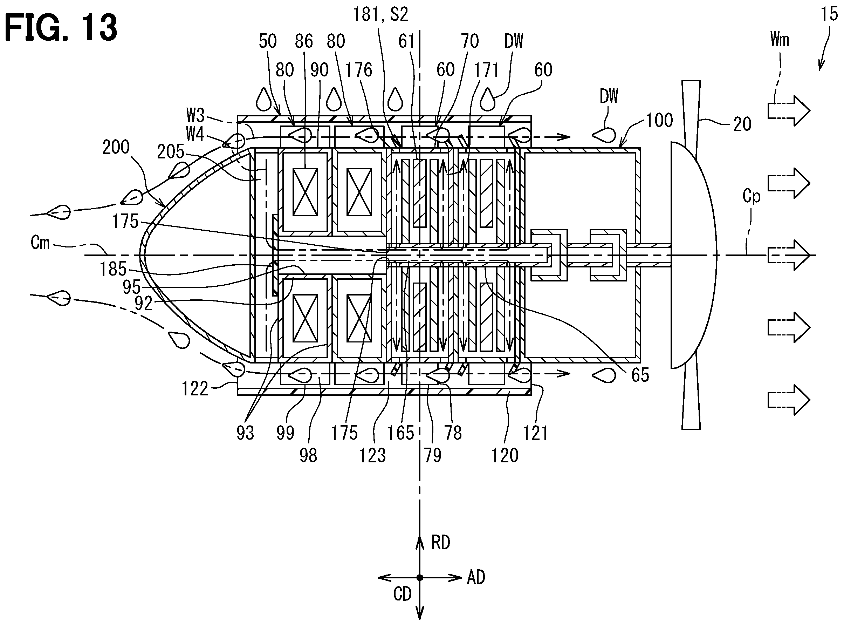

In FIG. 13, assume a case where the eVTOL 10 is in a seventh situation. In the seventh situation, the propulsion device 15 for cruise is being driven. Thus, in the seventh situation, the propeller airflow Wp flows in the horizontal direction from the EPU 50 toward the propeller 20. In FIG. 13, the propeller airflow Wp is not illustrated. In the seventh situation, the eVTOL 10 is moving toward the EPU head 200 side. Consequently, in the seventh situation, the movement airflow Wm horizontally flows in the same direction as the propeller airflow Wp. In the seventh situation, the forward outer peripheral airflow W3 and the forward internal airflow W4 are generated as the movement airflow Wm and the propeller airflow Wp are generated.

In the seventh situation, water droplets DW may fly in the horizontal direction toward the EPU head 200 along with the propeller airflow Wp and the movement airflow Wm. When the water droplets DW even moving toward the motor inlet opening 175 reach the EPU head 200, the water droplets DW move along the head outer wall 201, thus moving away from the motor inlet opening 175 toward the outer periphery. That is, the EPU head 200 guides the water droplets DW approaching in the axial direction AD away from the motor inlet opening 175 toward the outer periphery. Then, the water droplets DW guided by the head outer wall 201 pass through the duct flow path 123 in the horizontal direction along with the forward outer peripheral airflow W3. The head outer wall 201 is sometimes referred to as a rainwater guide part or a foreign matter guide part.

On the motor housing 70, the flow of the forward outer peripheral airflow W3 and the forward internal airflow W4 causes the motor seals 181 to be in the open state S2. Even when the motor seals 181 are thus in the open state S2, in the duct flow path 123, water droplets DW are prevented from entering the motor spaces 171 through the motor outlet openings 176 by the forward internal airflow W4 flowing out through the motor outlet openings 176. Also in the seventh situation, as in the sixth situation, entry of falling water droplets DW into the motor spaces 171 through the motor outlet openings 176 is restricted by the outer peripheral duct 120.

According to the present embodiment, the EPU head 200 guides foreign matter away from the motor inlet opening 175 toward the outer periphery. In this configuration, even when the motor inlet opening 175 opens the motor spaces 171 to the upstream side of the propeller airflow Wp and the movement airflow Wm, the EPU head 200 can restrict entry of foreign matter into the motor inlet opening 175. On the other hand, the EPU head 200 covers the motor inlet opening 175 from the axial direction AD so that the forward internal airflow W4 flows into the motor inlet opening 175. Consequently, the forward internal airflow W4 can enhance the effect of heat dissipation from the motor spaces 171 while foreign matter can be prevented from entering the motor spaces 171 through the motor inlet opening 175.

According to the present embodiment, the front end portion of the head outer wall 201 is accommodated in the outer peripheral duct 120. In this configuration, water droplets DW that have reached the head outer wall 201 by traveling in the axial direction AD are guided toward the outer periphery by the head outer wall 201 and thus easily enter the duct flow path 123 through the second duct opening 122. The water droplets DW are likely to pass over the head openings 202 due to their own inertia and move through the duct flow path 123 toward the first duct opening 121 in the axial direction AD. Thus, by actively guiding water droplets DW into the duct flow path 123, the water droplets DW can be effectively prevented from entering the head openings 202 and reaching the motor inlet opening 175.

### <Third Embodiment>

In the second embodiment, the propulsion device 15 includes the outer peripheral duct 120. In contrast, in a third embodiment, the propulsion device 15 does not include an outer duct such as the outer peripheral duct 120. Configurations, functions, and effects not specifically described in the third embodiment are the same as those of the second embodiment. In the third embodiment, differences from the second embodiment will be mainly described.

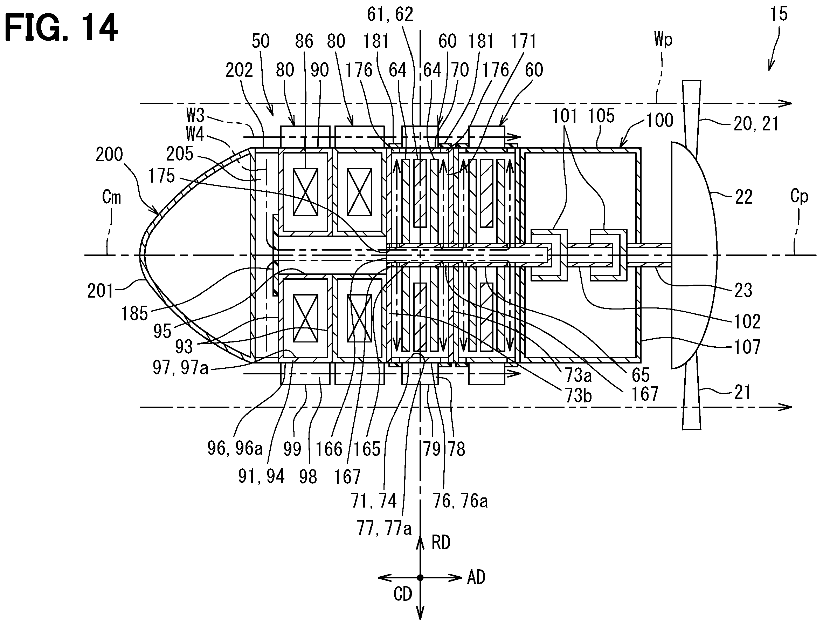

As illustrated in FIG. 14, the EPU 50 does not include the outer peripheral duct 120 unlike in the second embodiment. In the EPU 50, the motor outer peripheral outer surfaces 76a, the inverter outer peripheral outer surfaces 96a, the motor fins 79, the inverter fins 99, the head openings 202, and others are exposed to the outer peripheral side. In the EPU 50, the forward outer peripheral airflow W3 flows through the inverter outer peripheral flow paths 98 and the motor outer peripheral flow paths 78 in the axial direction AD. Also in the present embodiment, the motor outer peripheral flow paths 78 correspond to outer flow paths. In the EPU 50, the motor seals 181 are exposed to the outer peripheral side. Also in this configuration, when the motor seals 181 are in the closed state S1 or when the forward internal airflow W4 flows out through the motor outlet openings 176, foreign matter is prevented from entering the motor spaces 171 through the motor outlet openings 176.

### <Fourth Embodiment>

In the second embodiment, an outer flow path such as the duct flow path 123 is formed outside the motor outer surfaces 76. In contrast, in a fourth embodiment, outer flow paths are formed inside the motor outer surfaces 76. Configurations, functions, and effects not specifically described in the fourth embodiment are the same as those of the second embodiment. In the fourth embodiment, differences from the second embodiment will be mainly described.

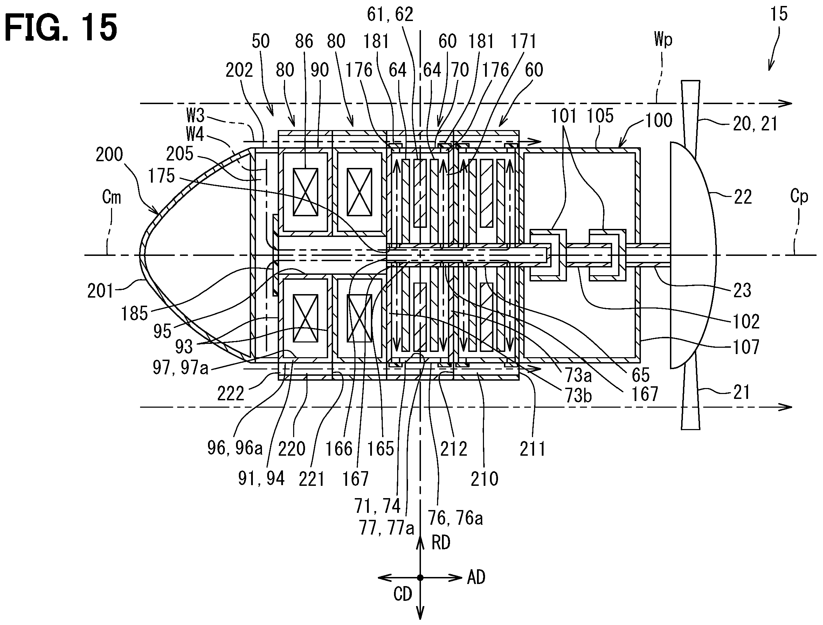

As illustrated in FIG. 15, each motor housing 70 includes a motor in-wall flow path 210. The motor in-wall flow path 210 is formed in the motor outer wall 74. The motor in-wall flow path 210 is provided between the motor outer surface 76 and the motor inner surface 77. The motor in-wall flow path 210 is provided outside the motor inner surface 77. For example, the motor in-wall flow path 210 is formed in the motor outer peripheral wall 71. The motor in-wall flow path 210 is formed between the motor outer peripheral outer surface 76a and the motor outer peripheral inner surface 77a. The motor in-wall flow path 210 is provided outside the motor outer peripheral inner surface 77a. The motor in-wall flow path 210 extends in the axial direction AD. The motor in-wall flow path 210 corresponds to an outer flow path.

The motor in-wall flow path 210 passes through the motor outer wall 74 in the axial direction AD. The motor in-wall flow path 210 includes a first motor wall opening 211 and a second motor wall opening 212. The first motor wall opening 211 and the second motor wall opening 212 are arranged in the axial direction AD. In the motor in-wall flow path 210, the end on the propeller 20 side is the first motor wall opening 211, and the end on the side opposite to the propeller 20 is the second motor wall opening 212. The first motor wall opening 211 opens the motor in-wall flow path 210 to the propeller 20 side. The second motor wall opening 212 opens the motor in-wall flow path 210 to the side opposite to the propeller 20.

The motor outlet openings 176 connect the motor space 171 and the motor in-wall flow path 210 to allow ventilation. The motor outlet openings 176 pass through portions of the motor outer peripheral wall 71 between the motor outer peripheral inner surface 77a and the motor in-wall flow path 210 in the radial direction RD. The motor seals 181 close the motor outlet openings 176 by covering the motor outlet openings 176 from the motor in-wall flow path 210 side. The motor seals 181 are provided in the motor in-wall flow path 210.

Each inverter housing 90 includes an inverter in-wall flow path 220. The inverter in-wall flow path 220 is formed in the inverter outer wall 94. The inverter in-wall flow path 220 is provided between the inverter outer surface 96 and the inverter inner surface 97. The inverter in-wall flow path 220 is provided outside the inverter inner surface 97. For example, the inverter in-wall flow path 220 is formed in the inverter outer peripheral wall 91. The inverter in-wall flow path 220 is formed between the inverter outer peripheral outer surface 96a and the inverter outer peripheral inner surface 97a. The inverter in-wall flow path 220 is provided outside the inverter outer peripheral inner surface 97a. The inverter in-wall flow path 220 extends in the axial direction AD.

The inverter in-wall flow path 220 passes through the inverter outer wall 94 in the axial direction AD. The inverter in-wall flow path 220 includes a first inverter wall opening 221 and a second inverter wall opening 222. The first inverter wall opening 221 and the second inverter wall opening 222 are arranged in the axial direction AD. In the inverter in-wall flow path 220, the end on the propeller 20 side is the first inverter wall opening 221, and the end on the side opposite to the propeller 20 is the second inverter wall opening 222. The first inverter wall opening 221 opens the inverter in-wall flow path 220 to the propeller 20 side. The second inverter wall opening 222 opens the inverter in-wall flow path 220 to the side opposite to the propeller 20.

In the two motor devices 60 adjacent to each other in the axial direction AD, their respective motor in-wall flow paths 210 are connected to each other to allow ventilation. The boundary between the two motor in-wall flow paths 210 adjacent to each other in the axial direction AD includes the first motor wall opening 211 of one of the motor in-wall flow paths 210 and the second motor wall opening 212 of the other. In the two inverter devices 80 adjacent to each other in the axial direction AD, their respective inverter in-wall flow paths 220 are connected to each other to allow ventilation. At the boundary between the two inverter in-wall flow paths 220 adjacent to each other in the axial direction AD, the first inverter wall opening 221 of one of the inverter in-wall flow paths 220 is connected to the second inverter wall opening 222 of the other. The motor in-wall flow path 210 and the inverter in-wall flow path 220 adjacent to each other in the axial direction AD are connected to each other to allow ventilation.

The EPU 50 does not include the outer peripheral duct 120. In the present embodiment, although the EPU 50 does not include the outer peripheral duct 120, the motor in-wall flow paths 210 as outer flow paths are provided to the motor housing 70. The EPU 50 may include the outer peripheral duct 120. That is, the duct flow path 123 may be provided on the outer peripheral side of the motor in-wall flow paths 210. In this configuration, a plurality of outer flow paths, that is, the motor in-wall flow paths 210 and the duct flow path 123 are arranged in the radial direction RD.

The EPU 50 does not include the motor fins 79 or the inverter fins 99. That is, the EPU 50 does not include the motor outer peripheral flow paths 78 and the inverter outer peripheral flow paths 98. The EPU 50 may include the motor fins 79 and the inverter fins 99. That is, the EPU 50 may include the motor outer peripheral flow paths 78 and the inverter outer peripheral flow paths 98. In this configuration, a plurality of outer flow paths, that is, the motor in-wall flow paths 210 and the motor outer peripheral flow paths 78 are arranged in the radial direction RD.

### <Fifth Embodiment>

In the first embodiment, the motor seals 181 transition from the closed state S1 to the open state S2 due to the generation of the reverse outer peripheral airflow W1 and the reverse internal airflow W2. In contrast, in a fifth embodiment, outflow restriction parts such as the motor seals 181 are opened and closed regardless of the presence or absence of the reverse outer peripheral airflow W1 and the reverse internal airflow W2. Configurations, functions, and effects not specifically described in the fifth embodiment are the same as those of the first embodiment. In the fifth embodiment, differences from the first embodiment will be mainly described.

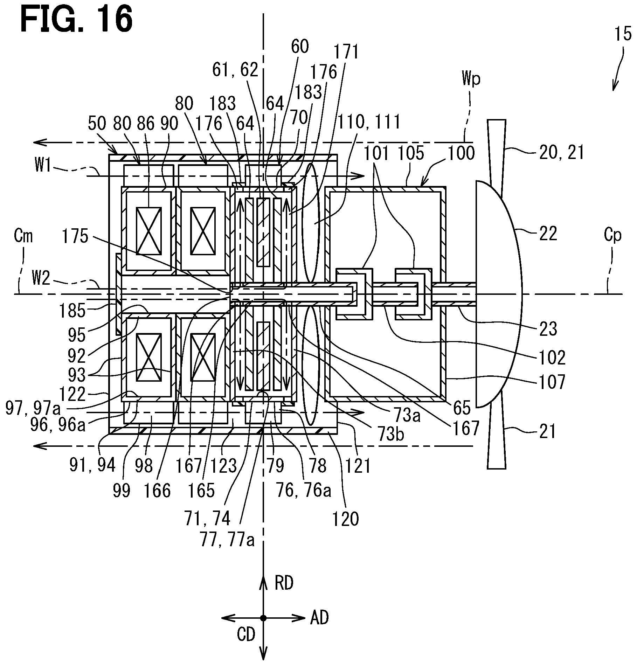

As illustrated in FIG. 16, the motor device 60 includes drive seals 183. The drive seals 183 are provided to the motor housing 70 so as to be able to open and close the motor outlet openings 176. The drive seals 183 are formed by valve members, opening and closing members, lip seals, or the like. For example, the drive seals 183 are formed in a seal shape. The drive seals 183 are individually provided to the corresponding motor outlet openings 176. The drive seals 183 are arranged in the circumferential direction CD.

The drive seals 183 can transition between the closed state S1 and the open state S2 similarly to the motor seals 181 of the first embodiment. When in the closed state S1, the drive seals 183 restrict ventilation through the motor outlet openings 176. In this case, the drive seals 183 restrict outflow of the reverse internal airflow W2 through the motor outlet openings 176 into the duct flow path 123. The drive seals 183 correspond to outflow restriction parts. The drive seals 183 are formed of a resin material or the like. The drive seals 183 have a ventilation blocking property to block ventilation.

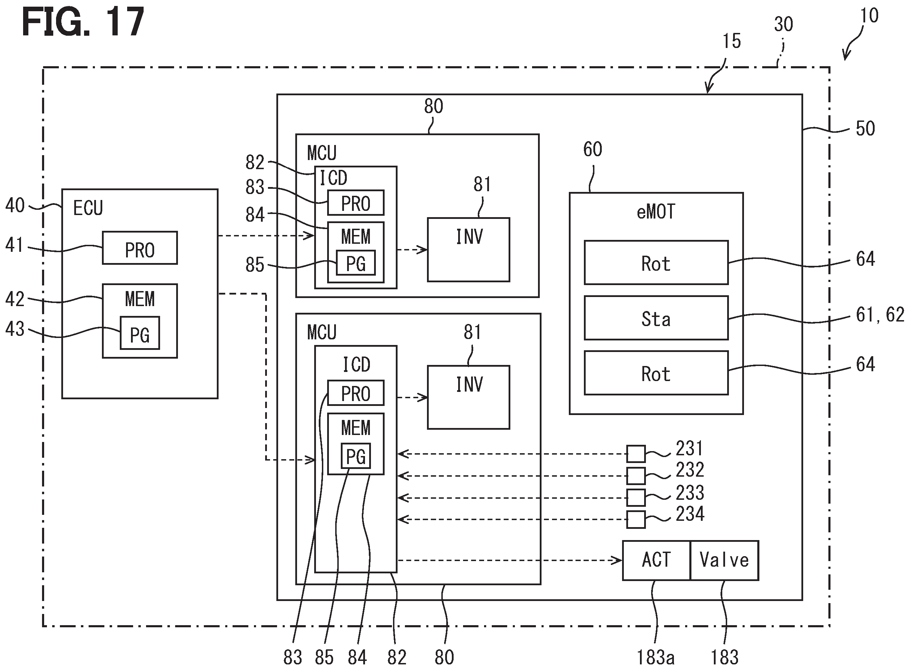

As illustrated in FIG. 17, the motor device 60 includes seal drive units 183a. The seal drive units 183a are drive units to open and close the drive seals 183. Each seal drive unit 183a includes an actuator such as an electric motor. The seal drive units 183a drive the drive seals 183 so that the drive seals 183 transition between the closed state S1 and the open state S2. The seal drive units 183a are individually provided to the corresponding drive seals 183. In FIG. 17, the drive seals 183 are denoted as Valve, and the seal drive units 183a as ACT.

The seal drive units 183a are communicatively connected to one of the inverter control units 82. The seal drive units 183a operate in response to a signal from the inverter control unit 82. The opening and closing of the drive seals 183 are controlled by the inverter control unit 82 via the seal drive units 183a. The drive seals 183 correspond to controlled restriction parts. The seal drive units 183a correspond to restriction drive units. In the EPU 50, at least one of the inverter control units 82 controls the seal drive units 183a. The inverter control unit 82 corresponds to a drive control unit. The seal drive units 183a may be communicatively connected to the flight control device 40. In this configuration, the seal drive units 183a may operate in response to a signal from the flight control device 40.

The EPU 50 includes an internal pressure sensor 231, an external pressure sensor 232, a motor rotation sensor 233, and a motor temperature sensor 234. The internal pressure sensor 231 includes a pressure sensor. The internal pressure sensor 231 detects a motor internal pressure. The motor internal pressure is the internal pressure of the motor housing 70. For example, the motor internal pressure is the pressure of the motor space 171. The internal pressure sensor 231 is provided inside the motor housing 70. For example, the internal pressure sensor 231 is provided in the motor space 171. The internal pressure sensor 231 outputs a detection signal corresponding to the motor internal pressure.

The external pressure sensor 232 includes a pressure sensor. The external pressure sensor 232 detects a motor external pressure. The motor external pressure is the external pressure of the motor housing 70. For example, the motor external pressure is a pressure in the duct flow path 123. The external pressure sensor 232 is provided outside the motor housing 70. For example, the external pressure sensor 232 is provided in the duct flow path 123. The external pressure sensor 232 outputs a detection signal corresponding to the motor external pressure.

The motor rotation sensor 233 detects the motor rpm. The motor rpm is the number of revolutions of the motor 61. The motor rpm is sometimes referred to as a motor rotational speed. The motor rotation sensor 233 includes an encoder, a resolver, or the like. The motor rotation sensor 233 is provided to the motor 61. The motor rotation sensor 233 is included in the motor device 60. The motor rotation sensor 233 outputs a detection signal corresponding to the motor rpm.

The motor temperature sensor 234 detects a motor temperature. The motor temperature is the temperature of the motor device 60. As the motor temperature, the temperature of the motor rotors 64, the temperature of the motor stator 62, the temperature of the motor space 171, or the like may be detected. The motor temperature sensor 234 is provided inside the motor housing 70. For example, the motor temperature sensor 234 is provided to the motor 61. The motor temperature sensor 234 outputs a detection signal corresponding to the motor temperature.

The sensors 231 to 234 are communicatively connected to one of the inverter control units 82. The sensors 231 to 234 output the detection signals to the inverter control unit 82. The inverter control unit 82 performs EPU control using the detection signals from the sensors 231 to 234.

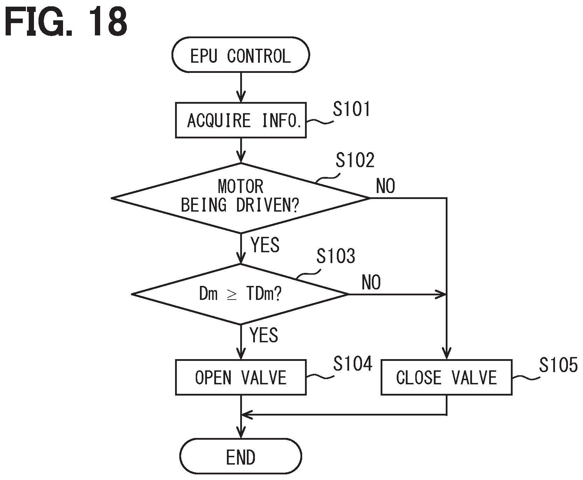

The inverter control unit 82 performs an EPU control process to perform the EPU control. The EPU control process will be described with reference to a flowchart of FIG. 18. The inverter control unit 82 repeatedly performs the EPU control process in a predetermined control cycle.

In step S101 illustrated in FIG. 18, the inverter control unit 82 performs an information acquisition process. In the information acquisition process, information on the eVTOL 10 is acquired. Examples of the information on the eVTOL 10 include information on the EPU 50 and information on the motor device 60. Examples of the information on the motor device 60 include information including the detection signals from the sensors 231 to 234.

In step S102, the inverter control unit 82 determines whether or not the motor 61 is being driven. If the motor 61 is being driven, the inverter control unit 82 proceeds to step S103.

In step S103, the inverter control unit 82 determines whether or not a drive duration Dm has reached a duration threshold TDm. The drive duration Dm is the time during which the motor 61 continues to be driven after the start of driving. The duration threshold TDm is a value determined in advance with a test or the like, and is stored in the memory 84 or the like. The duration threshold TDm is set, for example, to one sec.

In the propulsion device 15, after the start of driving of the motor 61, the flow of the reverse outer peripheral airflow W1 becomes stronger as the motor rpm increases. In a case where the flow of the reverse outer peripheral airflow W1 is weak, even if the motor outlet openings 176 are opened, the reverse outer peripheral airflow W1 may not be able to draw out gas in the motor space 171 through the motor outlet openings 176, and the reverse internal airflow W2 may not be generated. When the reverse internal airflow W2 is not generated, there is concern that foreign matter may enter the motor space 171 through the motor outlet openings 176 along with the reverse outer peripheral airflow W1.

For this, the duration threshold TDm is set to the time required for the flow of the reverse outer peripheral airflow W1 to become strong enough to generate the reverse internal airflow W2 after the start of driving of the motor 61. When the drive duration Dm has reached the duration threshold TDm, the inverter control unit 82 determines that the flow of the reverse outer peripheral airflow W1 has become strong enough to generate the reverse internal airflow W2. If the drive duration Dm has reached the duration threshold TDm, the inverter control unit 82 proceeds to step S104.

In step S104, the inverter control unit 82 performs a valve opening process. In the valve opening process, a process to bring the drive seals 183 into the open state S2 is performed. For example, when the drive seals 183 are in the closed state S1, the inverter control unit 82 drives the seal drive units 183a so that the drive seals 183 transition from the closed state S1 to the open state S2. When the drive seals 183 are already in the closed state S1, the inverter control unit 82 controls the seal drive units 183a so that the drive seals 183 are held in the open state S2.

If the motor 61 is not being driven or if the drive duration Dm has not reached the duration threshold TDm, the inverter control unit 82 proceeds to step S105. In step S105, the inverter control unit 82 performs a valve closing process. In the valve closing process, a process to bring the drive seals 183 into the closed state S1 is performed. For example, when the drive seals 183 are in the open state S2, the inverter control unit 82 drives the seal drive units 183a so that the drive seals 183 transition from the open state S2 to the closed state S1. When the drive seals 183 are already in the open state S2, the inverter control unit 82 controls the seal drive units 183a so that the drive seals 183 are held in the closed state S1.

In the present embodiment, when the drive duration Dm has reached the duration threshold TDm, the motor outlet openings 176 are opened by the drive seals 183. In this configuration, the motor outlet openings 176 are opened in a state where the flow of the reverse outer peripheral airflow W1 has become sufficiently strong after the start of driving of the motor 61. Consequently, the reverse internal airflow W2 easily flows out through the motor outlet openings 176 into the duct flow path 123 as the drive seals 183 are opened. Thus, the reverse internal airflow W2 can prevent foreign matter from entering the motor space 171 through the motor outlet openings 176 along with the reverse outer peripheral airflow W1.

According to the present embodiment, the inverter control unit 82 controls the drive seals 183 via the seal drive units 183a. In this configuration, heat dissipation from the motor space 171 with the reverse internal airflow W2 can be controlled by the inverter control unit 82 regardless of an event such as the reverse outer peripheral airflow W1 generated as the motor 61 is driven. Consequently, the heat dissipation effect of the motor device 60 can be enhanced by the inverter control unit 82 by causing the drive seals 183 to transition to the open state S2 at the timing when heat dissipation from the motor device 60 is necessary, for example.

### <Sixth Embodiment>

In the fifth embodiment, the drive seals 183 are opened regardless of the motor rpm. In contrast, in a sixth embodiment, the drive seals 183 are opened depending on the motor rpm. Configurations, functions, and effects not specifically described in the sixth embodiment are the same as those of the fifth embodiment. In the sixth embodiment, differences from the fifth embodiment will be mainly described.

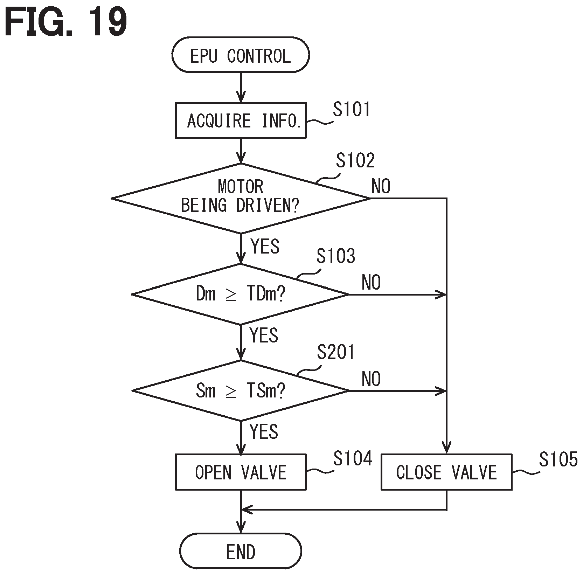

In the present embodiment, an EPU control process will be described with reference to a flowchart of FIG. 19. The inverter control unit 82 performs the process of steps S101 to S105 as in the fifth embodiment.

In step S103, if the drive duration Dm has reached the duration threshold TDm, the inverter control unit 82 proceeds to step S201. In step S201, the inverter control unit 82 determines whether or not the motor rpm Sm has reached an rpm threshold TSm. The inverter control unit 82 calculates the motor rpm Sm using the detection signal from the motor rotation sensor 233. The rpm threshold TSm is a value determined in advance with a test or the like, and is stored in the memory 84 or the like. The rpm threshold TSm is set, for example, to 1000 rpm.

In the propulsion device 15, when the motor rpm Sm is insufficient, the flow of the reverse outer peripheral airflow W1 is insufficient, and the reverse internal airflow W2 is unlikely to be generated. For example, even when the drive duration Dm has reached the duration threshold TDm, if the reverse internal airflow W2 is not generated as the motor outlet openings 176 are opened, there is concern that foreign matter may enter the motor space 171 through the motor outlet openings 176 along with the reverse outer peripheral airflow W1.

For this, the rpm threshold TSm is set to the value required to generate the reverse internal airflow W2 as the motor outlet openings 176 are opened. If the motor rpm Sm has reached the rpm threshold TSm, the inverter control unit 82 determines that the flow of the reverse outer peripheral airflow W1 has become strong enough to generate the reverse internal airflow W2. If the motor rpm Sm has reached the rpm threshold TSm, the inverter control unit 82 proceeds to step S104 and performs the valve opening process. If the motor rpm Sm has not reached the rpm threshold TSm, the inverter control unit 82 proceeds to step S105 and performs the valve closing process.

In the present embodiment, when the motor rpm Sm has reached the rpm threshold TSm, the motor outlet openings 176 are opened by the drive seals 183. In this configuration, the motor rpm Sm is used as a parameter to determine whether or not to open the drive seals 183, and thus the motor outlet openings 176 can be opened in a state where the flow of the reverse outer peripheral airflow W1 has become reliably strong. Consequently, by using the rotation of the motor 61, it is possible to reliably prevent foreign matter from entering the motor space 171 through the motor outlet openings 176 along with the reverse outer peripheral airflow W1.

The inverter control unit 82 may determine whether or not the motor rpm Sm has reached the rpm threshold TSm regardless of the result of determination of whether or not the motor 61 is being driven and the result of determination of whether or not the drive duration Dm has reached the duration threshold TDm. The inverter control unit 82 need not determine whether or not the motor 61 is being driven and whether or not the drive duration Dm has reached the duration threshold TDm.

### <Seventh Embodiment>

In the sixth embodiment, the drive seals 183 are opened regardless of the motor temperature. In contrast, in a seventh embodiment, the drive seals 183 are opened depending on the motor temperature. Configurations, functions, and effects not specifically described in the seventh embodiment are the same as those of the sixth embodiment. In the sixth embodiment, differences from the sixth embodiment will be mainly described.

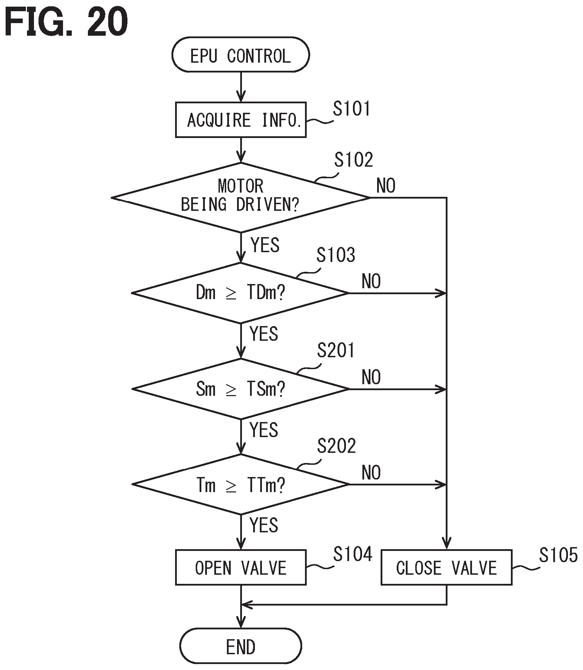

In the present embodiment, an EPU control process will be described with reference to a flowchart of FIG. 20. The inverter control unit 82 performs the process of steps S101 to S105 and S201 as in the sixth embodiment.

In step S201, if the motor rpm Sm has reached the rpm threshold TSm, the inverter control unit 82 proceeds to step S202. In step S202, the inverter control unit 82 determines whether or not a motor temperature Tm has reached a temperature threshold TTm. The inverter control unit 82 calculates the motor temperature Tm using the detection signal from the motor temperature sensor 234. The temperature threshold TTm is a value determined in advance with a test or the like, and is stored in the memory 84 or the like. For example, the temperature threshold TTm is set to the upper limit of a temperature range in which the motor 61 is normally driven.

If the motor temperature Tm has reached the temperature threshold TTm, the inverter control unit 82 proceeds to step S104 and performs the valve opening process. If the motor temperature Tm has not reached the temperature threshold TTm, the inverter control unit 82 proceeds to step S105 and performs the valve closing process.

According to the present embodiment, in the propulsion device 15, the ventilation of the motor space 171 is performed with the reverse internal airflow W2 to prevent the motor temperature Tm from becoming high enough to reach the temperature threshold TTm. Thus, when the motor 61 has not reached a high temperature, it is not always necessary to ventilate the motor space 171 with the reverse internal airflow W2. For example, when the motor temperature Tm has not reached the temperature threshold TTm, priority can be given to preventing foreign matter from entering the motor space 171 through the motor outlet openings 176 over enhancing the effect of heat dissipation from the motor 61 by not opening the motor outlet openings 176. Since the drive seals 183 are opened only when the motor 61 is at a high temperature, the frequency of causing gas to flow into the motor housing 70 can be reduced. Consequently, the risk of foreign matter entering the inside of the motor housing 70 can be reduced.

The inverter control unit 82 may determine whether or not the motor temperature Tm has reached the temperature threshold TTm regardless of the result of determination of whether or not the motor 61 is being driven and the result of determination of whether or not the drive duration Dm has reached the duration threshold TDm. The inverter control unit 82 may determine whether or not the motor temperature Tm has reached the temperature threshold TTm regardless of the result of determination of whether or not the motor rpm Sm has reached the rpm threshold TSm. Further, the inverter control unit 82 need not determine whether or not the motor 61 is being driven, whether or not the drive duration Dm has reached the duration threshold TDm, and whether or not the motor rpm Sm has reached the rpm threshold TSm.

### <Eighth Embodiment>

In the fifth embodiment, the drive seals 183 are opened regardless of the motor internal pressure and the motor external pressure. In contrast, in an eighth embodiment, the drive seals 183 are opened depending on the motor internal pressure and the motor external pressure. Configurations, functions, and effects not specifically described in the eighth embodiment are the same as those of the fifth embodiment. In the eighth embodiment, differences from the fifth embodiment will be mainly described.

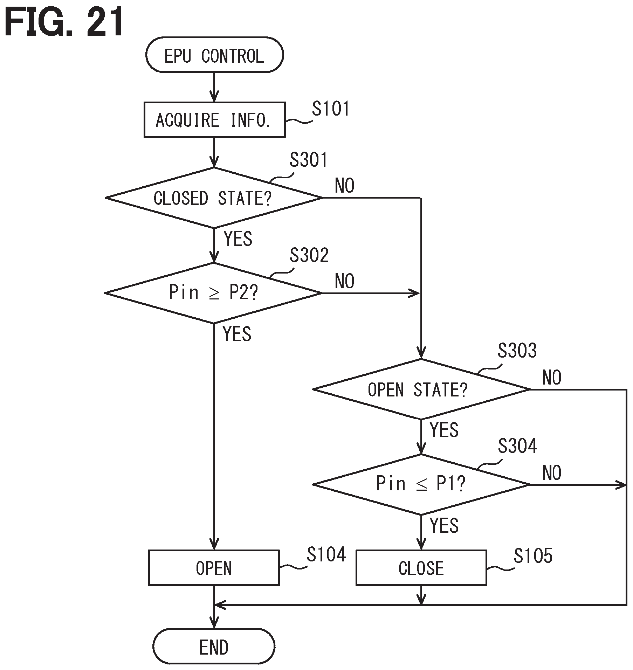

In the present embodiment, an EPU control process will be described with reference to a flowchart of FIG. 21. The inverter control unit 82 performs the process of steps S101, S104, and S105 as in the fifth embodiment.

After step S101, the inverter control unit 82 proceeds to step S301. In step S301, the inverter control unit 82 determines whether or not the drive seals 183 are in the closed state S1. If the drive seals 183 are in the closed state S1, the inverter control unit 82 proceeds to step S302.

In step S302, the inverter control unit 82 determines whether or not a motor internal pressure Pin is higher than or equal to a second internal pressure P2. The inverter control unit 82 calculates the motor internal pressure Pin using the detection signal from the internal pressure sensor 231. The second internal pressure P2 is a predetermined value and is stored in the memory 84 or the like. For example, the second internal pressure P2 is set to the upper limit of a pressure range in which the motor 61 is normally driven. The second internal pressure P2 is set to a value higher than a motor external pressure Pout. The inverter control unit 82 calculates the motor external pressure Pout using the detection signal from the external pressure sensor 232. The second internal pressure P2 may be variably set according to the motor external pressure Pout.

In the propulsion device 15, if the motor outlet openings 176 are opened in a state where the motor internal pressure Pin is insufficient, it is feared that foreign matter may enter the motor space 171 through the motor outlet openings 176 along with the reverse outer peripheral airflow W1. For example, when the motor internal pressure Pin is lower than or equal to the motor external pressure Pout, foreign matter and the reverse outer peripheral airflow W1 are likely to enter the motor space 171 through the motor outlet openings 176. For this, the second internal pressure P2 is set to a value high enough to prevent foreign matter and the reverse outer peripheral airflow W1 from entering the motor space 171 through the motor outlet openings 176 even when the motor outlet openings 176 are opened.

If the motor internal pressure Pin has reached the second internal pressure P2, the inverter control unit 82 proceeds to step S104 and performs the valve opening process. In this case, the motor internal pressure Pin has a value high enough to reach the second internal pressure P2. Consequently, even when the motor outlet openings 176 are opened, foreign matter and the reverse outer peripheral airflow W1 are unlikely to flow into the motor space 171 through the motor outlet openings 176.

If the drive seals 183 are not in the closed state S1, or if the motor internal pressure Pin has not reached the second internal pressure P2, the inverter control unit 82 proceeds to step S303. In step S303, the inverter control unit 82 determines whether or not the drive seals 183 are in the open state S2. If the drive seals 183 are in the open state S2, the inverter control unit 82 proceeds to step S304.

In step S304, the inverter control unit 82 determines whether or not the motor internal pressure Pin is lower than or equal to a first internal pressure P1. The first internal pressure P1 is a predetermined value and is stored in the memory 84 or the like. For example, the first internal pressure P1 is set to a value lower than the second internal pressure P2. The first internal pressure P1 is set to a value higher than the motor external pressure Pout. The first internal pressure P1 may be variably set according to the motor external pressure Pout.

If the motor internal pressure Pin has decreased to the first internal pressure P1, the inverter control unit 82 proceeds to step S105 and performs the valve closing process. In this case, the motor internal pressure Pin has a value low enough to decrease to the first internal pressure P1. This can avoid a situation in which the seal drive units 183a cause the drive seals 183 to transition from the open state S2 to the closed state S1 against the excessively high motor internal pressure Pin.

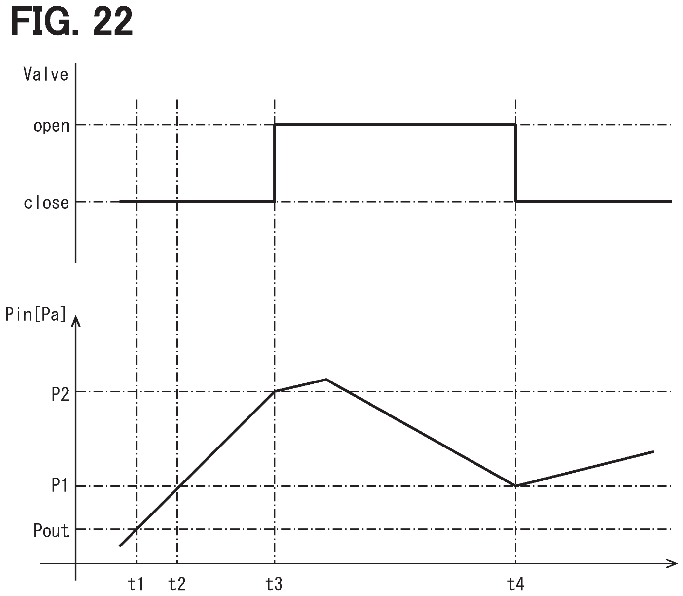

The operation of the drive seals 183 will be described with reference to FIG. 22. In FIG. 22, the drive seals 183 are denoted as Valve, the closed state S1 as close, and the open state S2 as open. In FIG. 22, in a situation where the drive seals 183 are in the closed state S1, the motor internal pressure Pin has substantially the same value as the motor external pressure Pout at timing t1. The motor internal pressure Pin rises after timing t1 and reaches the first internal pressure P1 at timing t2. However, if the drive seals 183 are in the closed state S1, the drive seals 183 are held in the closed state S1 even when the motor internal pressure Pin has reached the first internal pressure P1.

The motor internal pressure Pin rises after timing t2 and reaches the second internal pressure P2 at timing t3. At timing t3, since the motor internal pressure Pin has reached the second internal pressure P2, the drive seals 183 transition from the closed state S1 to the open state S2. After timing t3, the motor internal pressure Pin decreases overall. At timing t4, the motor internal pressure Pin decreases to the first internal pressure P1. At timing t4, since the motor internal pressure Pin has decreased to the first internal pressure P1, the drive seals 183 transition from the open state S2 to the closed state S1.

### <Ninth Embodiment>

In the first embodiment, the reverse internal airflow W2 flows into the motor space 171 through the shaft space 165. In contrast, in a ninth embodiment, the reverse internal airflow W2 flows into the motor space 171 without passing through the shaft space 165. Configurations, functions, and effects not specifically described in the ninth embodiment are the same as those of the first embodiment. In the ninth embodiment, differences from the first embodiment will be mainly described.

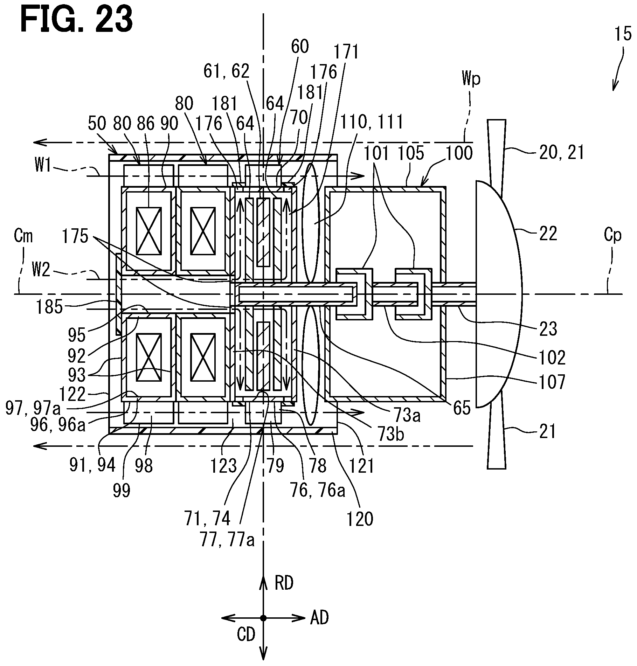

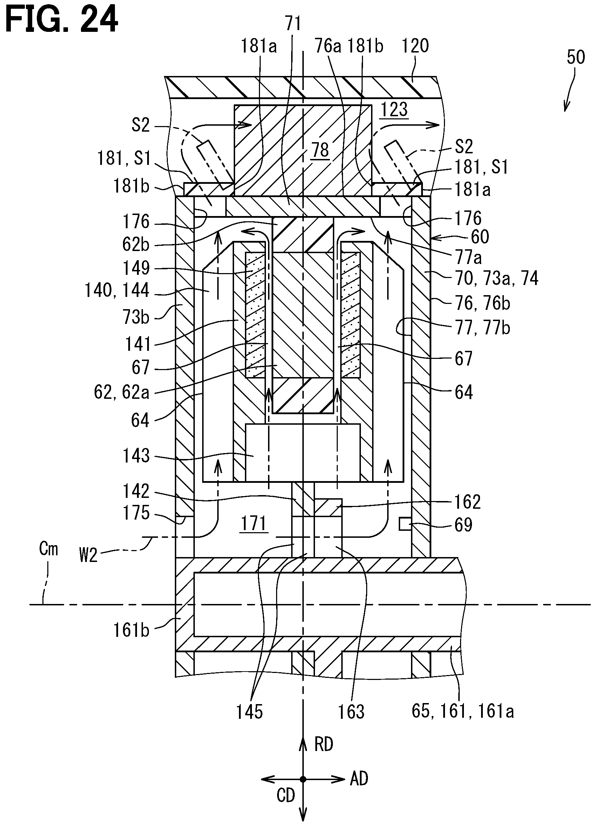

As illustrated in FIGS. 23 and 24, motor inlet openings 175 directly connect the inverter housing hole 95 and the motor space 171 to allow ventilation. That is, air can pass through the inverter housing hole 95 and the motor space 171 without passing through the shaft space 165. The motor inlet openings 175 open the motor space 171 to the downstream side of the propeller airflow Wp in a straight iron manner without the shaft space 165 therebetween. The motor inlet openings 175 are provided on the outer peripheral side of the shaft outer wall 161. The motor inlet openings 175 are provided between the shaft outer wall 161 and one of the inverter inner peripheral walls 92 in the radial direction RD. The motor inlet openings 175 are arranged in the circumferential direction CD. The motor shaft 65 is not fitted in the motor inlet openings 175. The motor shaft 65 is covered by the second motor facing wall 73b from the axial direction AD.

As illustrated in FIG. 24, in the motor space 171, the reverse internal airflow W2 can pass through the holder extended portion 142 and the shaft flange 162 in the axial direction AD. The holder extended portion 142 is provided with holder air holes 145. The holder air holes 145 pass through the holder extended portion 142 in the axial direction AD. The holder air holes 145 are arranged in the circumferential direction CD. The shaft flange 162 is provided with flange air holes 163. The flange air holes 163 pass through the shaft flange 162 in the axial direction AD. The flange air holes 163 are arranged in the circumferential direction CD. The holder air holes 145 and the flange air holes 163 are aligned in the axial direction AD.

### <Tenth Embodiment>

In the first embodiment, the reverse-flow fan 110 is provided between the motor device 60 and the propeller 20. In contrast, in a tenth embodiment, the reverse-flow fan 110 is provided opposite to the propeller 20 across the motor device 60. Configurations, functions, and effects not specifically described in the tenth embodiment are the same as those of the first embodiment. In the tenth embodiment, differences from the first embodiment will be mainly described.

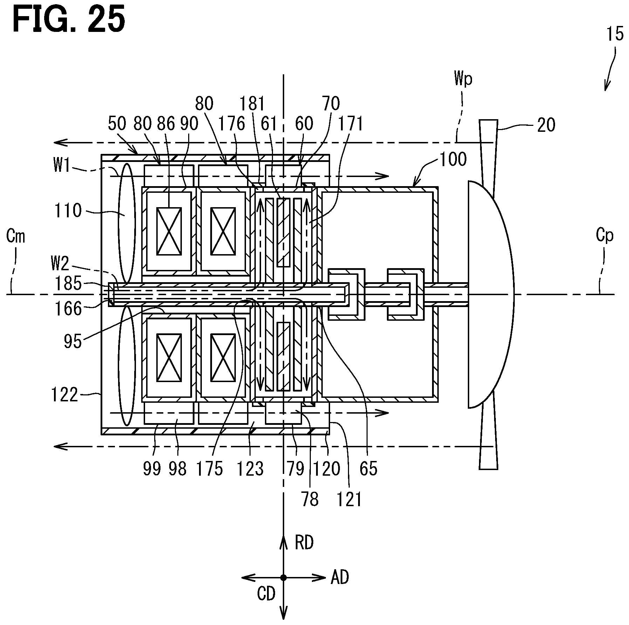

As illustrated in FIG. 25, the reverse-flow fan 110 is provided opposite to the propeller 20 across both the motor device 60 and the inverter devices 80. The motor shaft 65 is extended between the reverse-flow fan 110 and the motor rotors 64, passing through the inverter housing hole 95. The motor shaft 65 extends toward the second duct opening 122 beyond the inverter housings 90. Unlike in the first embodiment, the air filter 185 is attached to the motor shaft 65. The air filter 185 is fixed to the shaft outer wall 161 so as to cover the shaft inlet opening 166 from the second duct opening 122 side. The air filter 185 is fixed to the shaft end wall 161b with an adhesive or the like.

### <Eleventh Embodiment>

In the first embodiment, each of the inverter devices 80 includes the inverter housing 90. In contrast, in an eleventh embodiment, the inverter devices 80 include a common inverter housing. Configurations, functions, and effects not specifically described in the eleventh embodiment are the same as those of the first embodiment. In the eleventh embodiment, differences from the first embodiment will be mainly described.

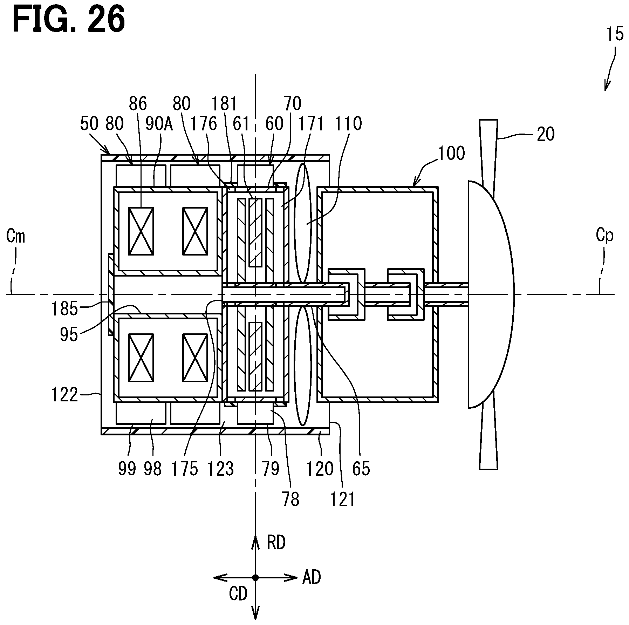

As illustrated in FIG. 26, the EPU 50 includes a common housing 90A. The common housing 90A is a housing into which the inverter housings 90 are integrated. Each of the inverter devices 80 includes part of the common housing 90A. In the inverter devices 80, the respective inverter units 86 are housed in the common housing 90A. The inverter housing hole 95 is formed in the common housing 90A as in the inverter housings 90 of the first embodiment.

### <Twelfth Embodiment>

In the first embodiment, the motor device 60 is provided between the inverter devices 80 and the propeller 20 in the axial direction AD. In contrast, in a twelfth embodiment, one of the inverter devices 80 is provided between the motor device 60 and the propeller 20 in the axial direction AD. Configurations, functions, and effects not specifically described in the twelfth embodiment are the same as those of the first embodiment. In the twelfth embodiment, differences from the first embodiment will be mainly described.

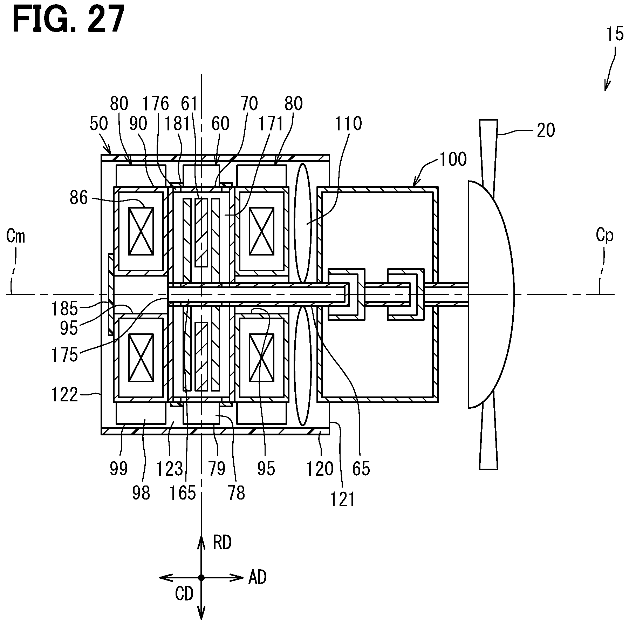

As illustrated in FIG. 27, the two inverter devices 80 are arranged in the axial direction AD with the motor device 60 therebetween. That is, the motor device 60 is provided between the two inverter devices 80 adjacent to each other in the axial direction AD. In the inverter device 80 provided between the motor device 60 and the propeller 20, the motor shaft 65 extending in the axial direction AD between the motor rotors 64 and the reverse-flow fan 110 is inserted through the inverter housing hole 95.

### <Thirteenth Embodiment>

In the first embodiment, the motor device 60 is provided between the inverter devices 80 and the propeller 20 in the axial direction AD. In contrast, in a thirteenth embodiment, the inverter devices 80 are provided between the motor device 60 and the propeller 20 in the axial direction AD. Configurations, functions, and effects not specifically described in the thirteenth embodiment are the same as those of the first embodiment. In the thirteenth embodiment, differences from the first embodiment will be mainly described.

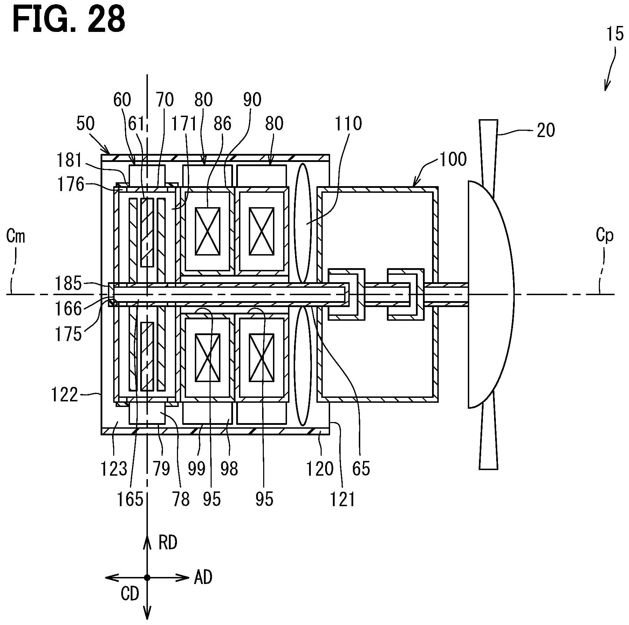

As illustrated in FIG. 28, the motor device 60 is provided opposite to the propeller 20 across the inverter devices 80 in the axial direction AD. In the inverter devices 80, the motor shaft 65 is inserted through the inverter housing hole 95. As in the tenth embodiment, the air filter 185 is fixed to the motor shaft 65 so as to cover the shaft inlet opening 166 from the second duct opening 122 side.

### <Fourteenth Embodiment>

In the first embodiment, the motor outlet openings 176 as the housing outlet openings are provided in the motor housing 70. In contrast, in a fourteenth embodiment, housing outlet openings are provided in the inverter housing 90. Configurations, functions, and effects not specifically described in the fourteenth embodiment are the same as those of the first embodiment. In the fourteenth embodiment, differences from the first embodiment will be mainly described.

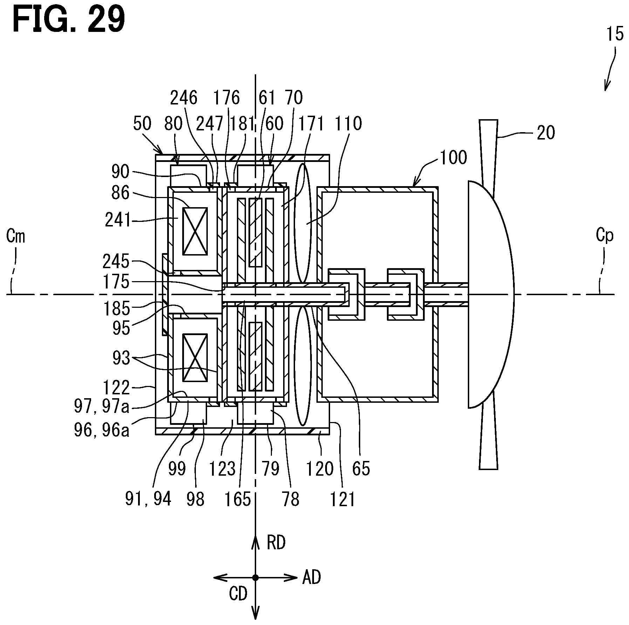

As illustrated in FIG. 29, the inverter housing 90 includes an inverter space 241. The inverter space 241 is the internal space of the inverter housing 90. The inverter unit 86 is accommodated in the inverter space 241. The inverter unit 86 corresponds to a propulsion drive unit. The inverter housing 90 corresponds to a drive housing. The inverter space 241 corresponds to a housing space. The inverter outer surface 96 corresponds to a housing outer surface. The inverter inner surface 97 corresponds to a housing inner surface.

The inverter housing 90 includes inverter inlet openings 245 and inverter outlet openings 246. The inverter inlet openings 245 are openings to allow gas to flow into the inverter space 241. For example, the reverse internal airflow W2 flows into the inverter space 241 through the inverter inlet openings 245. The inverter inlet openings 245 pass through the inverter outer wall 94 so as to open the inverter space 241 to the outside of the inverter housing 90. The inverter inlet openings 245 correspond to housing inlet openings.

The inverter inlet openings 245 open the inverter space 241 to the inverter housing hole 95. The inverter space 241 connects the inverter space 241 and the internal space of the inverter housing hole 95 to allow ventilation. The inverter inlet openings 245 are provided in the inverter inner peripheral wall 92. The inverter inlet openings 245 pass through the inverter inner peripheral wall 92 in the radial direction RD. The inverter inlet openings 245 are arranged in the circumferential direction CD. The inverter inlet openings 245 may be arranged in the axial direction AD.

The inverter outlet openings 246 are openings to allow gas to flow out of the inverter space 241 into the outside of the inverter housing 90. For example, the reverse internal airflow W2 flows out of the inverter space 241 through the inverter outlet openings 246. The inverter outlet openings 246 pass through the inverter outer wall 94 so as to open the inverter space 241 to the outside of the inverter housing 90. The inverter outlet openings 246 open the inverter space 241 to the duct flow path 123. The inverter outlet openings 246 connect the inverter space 241 and the duct flow path 123 to allow ventilation. The inverter outlet openings 246 correspond to housing outlet openings.

The inverter outlet openings 246 are provided in the inverter outer peripheral wall 91. The inverter outlet openings 246 pass through the inverter outer peripheral wall 91 in the radial direction RD. The inverter outlet openings 246 are extended between the inverter outer peripheral outer surface 96a and the inverter outer peripheral inner surface 97a in the inverter outer peripheral wall 91. The inverter outlet openings 246 are arranged in the circumferential direction CD. The inverter outlet openings 246 may be arranged in the axial direction AD.

The inverter device 80 includes inverter seals 247. The inverter seals 247 are provided to the inverter housing 90 so as to be able to open and close the inverter outlet openings 246. The inverter seals 247 are formed by valve members, opening and closing members, lip seals, or the like. The inverter seals 247 are individually provided to the corresponding inverter outlet openings 246. Similarly to the inverter outlet openings 246, the inverter seals 247 are arranged in the circumferential direction CD.

Similarly to the motor seals 181, the inverter seals 247 can transition between the closed state S1 and the open state S2. For the inverter seals 247, the closed state S1 corresponds to a restriction state, and the open state S2 corresponds to an allowance state. The inverter seals 247 correspond to outflow restriction parts. The inverter seals 247 are formed of a resin material, a rubber material, or the like so as to be elastically deformable. The inverter seals 247 have a ventilation blocking property to block ventilation. Similarly to the motor seals 181, the inverter seals 247 transition between the closed state S1 and the open state S2 by elastic deformation. The inverter seals 247 correspond to elastic restriction parts.

In the present embodiment, the number of the motor devices 60 and the number of the inverter devices 80 included in the EPU 50 are the same. For example, one EPU 50 includes one motor device 60 and one inverter device 80.

### <Fifteenth Embodiment>

In the first embodiment, the inverter devices 80 are arranged in the axial direction AD in the EPU 50. In contrast, in a fifteenth embodiment, a plurality of inverter devices 80 are arranged in the circumferential direction CD in the EPU 50. Configurations, functions, and effects not specifically described in the fifteenth embodiment are the same as those of the first embodiment. In the fifteenth embodiment, differences from the first embodiment will be mainly described.

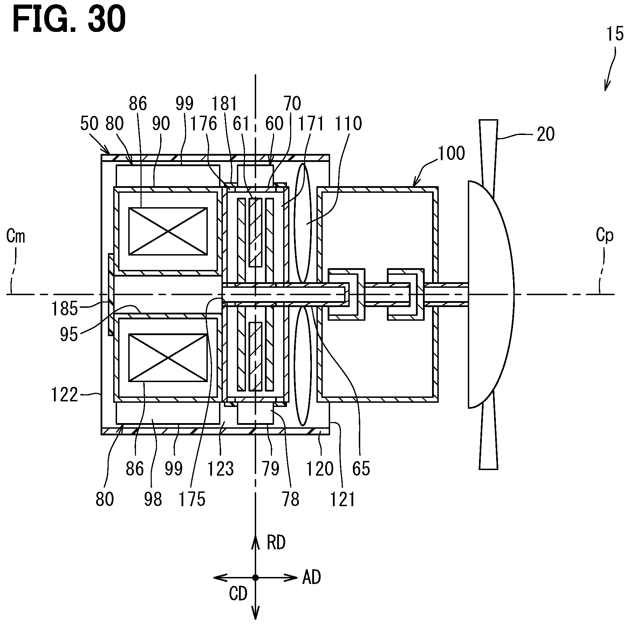

As illustrated in FIG. 30, in one EPU 50, the inverter devices 80 are arranged in the circumferential direction CD. All of the inverter devices 80 are located adjacent to the motor device 60 in the axial direction AD. In the EPU 50, the inverter housings 90 are arranged in the circumferential direction CD. In a configuration in which the EPU 50 includes two inverter devices 80, two inverter housings 90 formed in a semi-annular shape are arranged in the circumferential direction CD. In the EPU 50, the inverter housing hole 95 is formed by combining the inverter housings 90. In the EPU 50, the inverter units 86 are arranged in the circumferential direction CD. The inverter devices 80 may be arranged in the radial direction RD.

### <Sixteenth Embodiment>

In the first embodiment, the reverse-flow fan 110 is provided between the motor device 60 and the propeller 20 in the axial direction AD. In contrast, in a sixteenth embodiment, the reverse-flow fan 110 is provided opposite to the propeller 20 across the motor device 60. Configurations, functions, and effects not specifically described in the sixteenth embodiment are the same as those of the first embodiment. In the sixteenth embodiment, differences from the first embodiment will be mainly described.

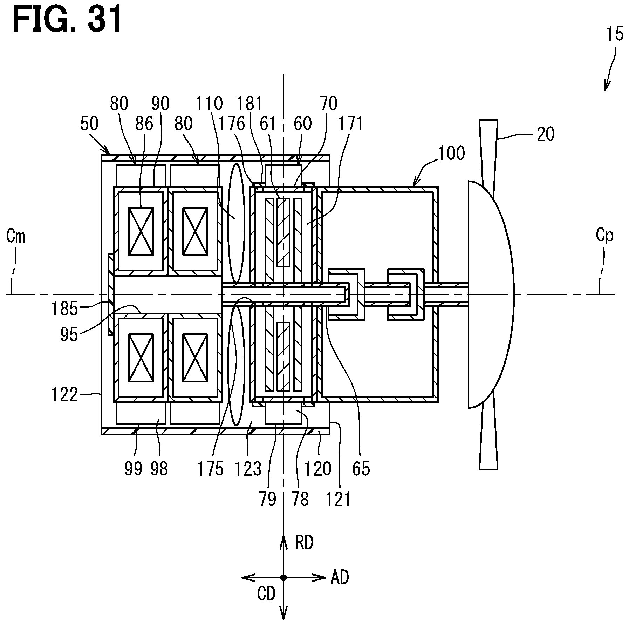

As illustrated in FIG. 31, the reverse-flow fan 110 is provided between the motor device 60 and the inverter devices 80 in the axial direction AD. The motor shaft 65 projects from the motor housing 70 toward the inverter housings 90 in the axial direction AD. The reverse-flow fan 110 is provided on a projecting portion of the motor shaft 65. The reverse-flow fan 110 may be provided between the two inverter devices 80 adjacent to each other in the axial direction AD. In a configuration in which the EPU 50 includes a plurality of motor devices 60, the reverse-flow fan 110 may be provided between two motor devices 60 adjacent to each other in the axial direction AD.

### <Seventeenth Embodiment>

In the first embodiment, the reverse-flow fan 110 that causes gas to flow in a direction opposite to that of the propeller airflow Wp in the axial direction AD is provided as an air-blowing fan in the propulsion device 15. In contrast, in a seventeenth embodiment, an air-blowing fan that causes gas to flow in the same direction as that of the propeller airflow Wp in the axial direction AD is provided in the propulsion device 15. Configurations, functions, and effects not specifically described in the sixteenth embodiment are the same as those of the second embodiment. In the sixteenth embodiment, differences from the second embodiment will be mainly described.

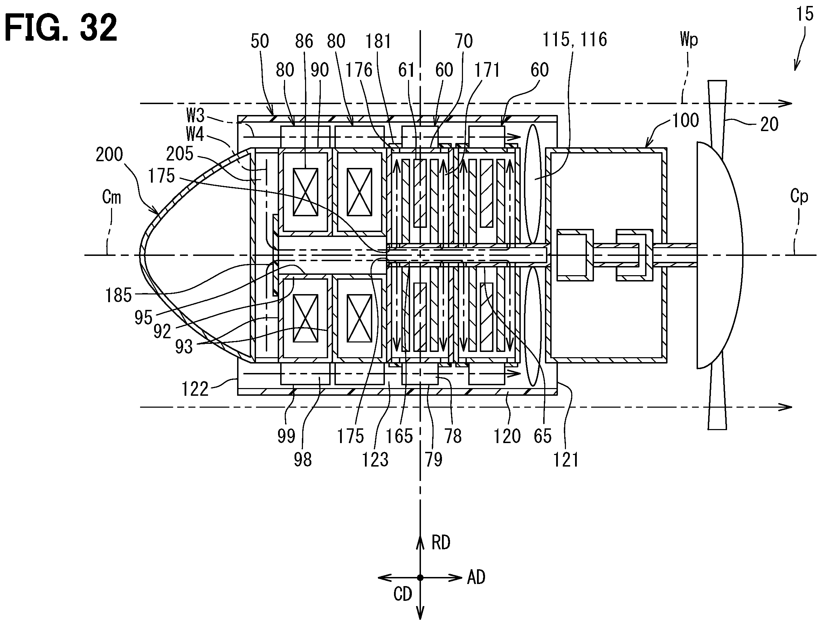

As illustrated in FIG. 32, the EPU 50 includes a forward-flow fan 115. The forward-flow fan 115 causes gas to flow in the same direction as that of the propeller airflow Wp in the axial direction AD. The forward-flow fan 115 has substantially the same configuration as the reverse-flow fan 110 of the first embodiment except that the blowing direction is the same as that of the propeller airflow Wp. For example, similarly to the reverse-flow fan 110 of the first embodiment, the forward-flow fan 115 is provided on the motor shaft 65 to rotate with the motor shaft 65. The forward-flow fan 115 includes forward-flow blades 116. The forward-flow blades 116 have substantially the same configuration as the reverse-flow blades 111 of the first embodiment except that the blowing direction is the same as that of the propeller airflow Wp. For example, the forward-flow blades 116 extend radially outward from the motor shaft 65.

The forward-flow fan 115 creates an airflow to generate the forward outer peripheral airflow W3 and the forward internal airflow W4. The forward-flow fan 115 corresponds to an air-blowing fan. For the forward-flow fan 115, the rotation direction of the forward-flow fan 115 and the orientation of the forward-flow blades 116 are set so that the forward outer peripheral airflow W3 flows in the same direction as the propeller airflow Wp in the axial direction AD. For example, for the forward-flow fan 115, the rotation direction of the forward-flow fan 115 is the same as the rotation direction of the propeller 20, and the orientation of the forward-flow blades 116 is the same as the orientation of the propeller blades 21. For the forward-flow blades 116, the direction in which the forward-flow blades 116 are inclined in the circumferential direction CD with respect to the motor axis Cm is the same as the direction in which the propeller blades 21 are inclined in the circumferential direction CD with respect to the motor axis Cm. For the forward-flow blades 116, the rotation direction of the forward-flow fan 115 may be opposite to the rotation direction of the propeller 20, and the orientation of the forward-flow blades 116 may be opposite to the orientation of the propeller blades 21.

### <Other Embodiments>

The disclosure of this description is not limited to the illustrated embodiments. The disclosure encompasses the illustrated embodiments and modifications made by those skilled in the art based on the embodiments. For example, the disclosure is not limited to combinations of the components and elements described in the embodiments, and various modifications can be made to implement the disclosure. The disclosure can be implemented by various combinations. The disclosure can include additional portions that can be added to the embodiments. The disclosure encompasses those in which a part and/or an element of the embodiments is omitted. The disclosure encompasses exchange or combination of parts and/or elements between one embodiment and another embodiment. The disclosed technical scope is not limited to the description of the embodiments. The disclosed technical scope is indicated by the description of the claims, and should be considered to further include all modifications within meaning and scope equivalent to the description of the claims.

In each of the above embodiments, the housing outlet openings such as the motor outlet openings 176 may be provided in any manner in the drive housing such as the motor housing 70. For example, in the first embodiment, the motor outlet openings 176 may be provided in the first motor facing wall 73a or the like as long as the motor outlet openings 176 allow gas such as the reverse internal airflow W2 to flow out of the motor space 171 into the duct flow path 123. The motor outlet openings 176 may be provided at positions aligned with the motor fins 79 in the circumferential direction CD.

In each of the above embodiments, the housing inlet opening such as the motor inlet opening 175 may be provided in any manner in the drive housing. For example, in the first embodiment, the motor inlet opening 175 may be provided in the motor outer peripheral wall 71 or the first motor facing wall 73a as long as the motor inlet opening 175 allows gas such as the reverse internal airflow W2 to flow into the motor space 171. The housing inlet opening need not be provided in the drive housing. In this case, it is preferable that the open area and the number of the housing outlet openings be sufficient to allow the inflow of gas in addition to the outflow of gas.

In each of the above embodiments, the outflow restriction parts such as the motor seals 181 may have any configuration as long as the outflow restriction parts can open and close the housing outlet openings. For example, in the first embodiment, the motor seals 181 may be formed in a plate shape with a material that is resistant to elastic deformation. For example, the motor seals 181 are pivotally supported on the motor housing 70 so as to be openable and closable. Each motor seal 181 is provided with a biasing member such as a spring that biases the motor seal 181 to the closed state S1. When the reverse outer peripheral airflow W1 is generated, the reverse outer peripheral airflow W1 and the reverse internal airflow W2 open the motor seals 181 against the biasing forces of the biasing members, so that the motor seals 181 transition from the closed state S1 to the open state S2.

In each of the above embodiments, the foreign matter restriction part such as the air filter 185 may have any configuration as long as the foreign matter restriction part can restrict the entry of foreign matter into the housing inlet opening. For example, in the first embodiment, as the foreign matter restriction part, a centrifuge or a labyrinth structural part may be provided for the housing inlet opening. The centrifuge is a device that separates foreign matter from the reverse internal airflow W2 flowing into the housing inlet opening, using centrifugal force. The labyrinth structural part is a structure that includes a labyrinth-like long space to remove foreign matter from the reverse internal airflow W2 when the reverse internal airflow W2 passes through the labyrinth-like long space.

In each of the above embodiments, the motor 61 need not be a double rotor motor. For example, the motor 61 may be a single rotor motor. The motor 61 need not be an axial gap motor. For example, the motor 61 may be a radial gap motor. In a radial gap motor, a rotor and a stator are arranged in the radial direction RD.

In each of the above embodiments, the propulsion control device only needs to include at least one of the flight control device 40 and the inverter control unit 82. At least one of the flight control device 40 and the inverter control unit 82 only needs to perform the EPU control process.

In each of the above embodiments, one propulsion device 15 may include a plurality of EPUs 50. For example, in one propulsion device 15, a plurality of EPUs 50 may be arranged in the radial direction RD or the circumferential direction CD. The EPUs 50 may be provided at positions offset from the propeller 20 in the radial direction RD.

In each of the above embodiments, the vertical take-off and landing aircraft on which the propulsion devices 15 are mounted only needs to be an electric vertical take-off and landing aircraft on which at least one propeller 20 is driven by at least one EPU 50. For example, one propeller 20 may be driven by a plurality of EPUs 50, or a plurality of propellers 20 may be driven by one EPU 50.

In each of the above embodiments, the aerial vehicle on which the propulsion devices 15 are mounted need not be a vertical take-off and landing aircraft as long as the aerial vehicle is electrically powered. For example, the aerial vehicle may be an aerial vehicle capable of taking off and landing involving running as an electric aircraft. Further, the aerial vehicle may be a rotorcraft or a fixed-wing aircraft. The aerial vehicle may be an unmanned aerial vehicle in which no person rides. The unmanned aerial vehicle may include the occupant compartment 14 or need not include the occupant compartment 14. A pilot may remotely operate the aerial vehicle. If the eVTOL 10 can carry a person, the eVTOL 10 may be referred to as a manned aerial vehicle even when the eVTOL 10 does not carry a person.

In each of the above embodiments, the mobile object on which the propulsion devices 15 are mounted need not be an aerial vehicle as long as the mobile object can move by the rotation of a rotating element. For example, the mobile object may be a vehicle, a ship, a construction machine, or an agricultural machine. For example, when the mobile object is a vehicle, a construction machine, or the like, rotating elements are moving wheels or the like, and output shafts are axles or the like. When the mobile object is a ship, a rotating element is a propulsion screw propeller or the like, and an output shaft is a propeller shaft or the like.

In each of the above embodiments, the flight control device 40 and the inverter control unit 82 are provided using a control system including at least one computer. The control system includes at least one processor that is hardware. When this processor is referred to as a hardware processor, the hardware processor can be provided using the following (i), (ii), or (iii).
(i) The hardware processor may be a hardware logic circuit. In this case, the computer is provided using a digital circuit including a large number of programmed logic units (gate circuits). The digital circuit may include a memory that stores at least one of a program and data. The computer may be provided using an analog circuit. The computer may be provided using a combination of a digital circuit and an analog circuit.
(ii) The hardware processor may be at least one processor core that executes a program stored in at least one memory. In this case, the computer is provided using at least one memory and at least one processor core. The processor core is referred to as a CPU, for example. The memory is also referred to as a storage medium. The memory is a non-transitory, tangible storage medium that non-transitorily stores "at least one of a program and data" readable by the processor.
(iii) The hardware processor may be a combination of the above (i) and the above (ii). (i) and (ii) are disposed on different chips or on the same chip.

That is, at least one of the means and function provided by the flight control device 40 and the inverter control unit 82 can be provided using only hardware, only software, or a combination thereof.

### (Disclosure of Technical Ideas)

This specification discloses multiple technical ideas described in multiple items listed below. Some items may be described in a multiple dependent form in which a preceding item is cited in the alternative in a subsequent item. Further, some items may be described in a multiple dependent form referring to another multiple dependent form. The items described in these multiple dependent forms define the multiple technical ideas.

### (Technical Idea 1)

A propulsion device (15) is configured to propel a mobile object (10). The propulsion device includes a propulsion drive unit (61, 86) configured to be driven by electric power to propel the mobile object; and a drive housing (70, 90) that houses the propulsion drive unit. The drive housing includes a housing inner surface (77, 97) defining a housing space (171, 241) in which the propulsion drive unit is housed, a housing outer surface (76, 96) facing outward away from the housing inner surface and extending along an outer flow path (78, 123, 210) located outward of the housing inner surface, and a housing outlet opening (176, 246) connecting the outer flow path and the housing space and configured to allow gas to flow out of the housing space into the outer flow path.

### (Technical Idea 2)

In the propulsion device according to technical idea 1, the drive housing includes a housing inlet opening (175, 245) through which the housing space communicates with an outside of the drive housing, allowing gas to flow into the housing space from the outside of the drive housing through the housing inlet opening.

### (Technical Idea 3)

The propulsion device according to technical idea 2 includes a foreign matter restriction part (185) configured to allow gas to flow into the housing inlet opening and restrict entry of foreign matter into the housing space through the housing inlet opening.

### (Technical Idea 4)

In the propulsion device according to technical idea 2 or 3, the drive housing includes a housing outer peripheral wall (71) extending in an axial direction (AD) and facing an outer peripheral side of the propulsion drive unit, and a housing covering wall (73b) facing the propulsion drive unit in the axial direction. The housing outlet opening is provided in the housing outer peripheral wall, and the housing inlet opening is provided in the housing covering wall.

### (Technical Idea 5)

The propulsion device according to any one of technical ideas 2 to 4 includes a cover member (200) facing the housing inlet opening in an axial direction and configured to allow gas to flow into the housing inlet opening and to guide foreign matter away from the housing inlet opening toward an outer periphery of the drive housing to restrict entry of the foreign matter into the housing inlet opening.

### (Technical Idea 6)

In the propulsion device according to any one of technical ideas 2 to 5, the propulsion drive unit includes a drive shaft (65) configured to rotate according to driving of the propulsion drive unit. The drive shaft includes a shaft inlet opening (166) through which an internal space (165) of the drive shaft communicates with an outside of the drive shaft, allowing gas to flow into the internal space from the housing inlet opening, and a shaft outlet opening (167) connecting the internal space and the housing space and configured to allow gas to flow out of the internal space into the housing space.

### (Technical Idea 7)

In the propulsion device according to any one of technical ideas 2 to 6, the propulsion device is configured to propel the mobile object by rotation of a propeller (20). The housing space communicates with the outside of the drive housing through the housing inlet opening in a downstream direction in a propeller airflow (Wp) generated by rotation of the propeller.

### (Technical Idea 8)

The propulsion device according to any one of technical ideas 1 to 7 includes an outflow restriction part (181, 183, 247) provided to the housing outlet opening and configured to transition between a restriction state (S1) restricting outflow of gas through the housing outlet opening and an allowance state (S2) allowing outflow of gas through the housing outlet opening.

### (Technical Idea 9)

In the propulsion device according to technical idea 8, the outflow restriction part includes an elastic restriction part (181, 247) configured to transition from the restriction state to the allowance state by being elastically deformed by a flow of gas through the outer flow path, and transition from the allowance state to the restriction state by exerting restoring force against the flow of gas through the outer flow path.

### (Technical Idea 10)

In the propulsion device according to technical idea 8 or 9, the outflow restriction part includes a controlled restriction part (183) configured to be controlled to transition between the restriction state and the allowance state; a restriction drive unit (183a) configured to be driven to cause the controlled restriction part to transition between the restriction state and the allowance state; and a drive control unit (82) configured to control driving of the restriction drive unit.

### (Technical Idea 11)

The propulsion device according to any one of technical ideas 1 to 10 includes an air-blowing fan (64, 110, 115) configured to create an airflow that causes gas to flow out of the housing space into the outer flow path through the housing outlet opening.

### (Technical Idea 12)

In the propulsion device according to any one of technical ideas 1 to 11, the propulsion drive unit includes a motor (61) including a motor rotor (64) configured to rotate about a rotation axis (Cm), and the motor rotor includes a rotor blade (144) configured to create an airflow that causes gas to flow out of the housing space into the outer flow path through the housing outlet opening according to rotation of the motor rotor.

### (Technical Idea 13)

The propulsion device according to any one of technical ideas 1 to 12 includes an outer duct (120) covering the housing outer surface and the housing outlet opening and forming the outer flow path between the outer duct and the housing outer surface.

### (Technical Idea 14)

In the propulsion device according to any one of technical ideas 1 to 13, the propulsion device is provided to an aerial vehicle (10) that is the mobile object, and is driven to propel the aerial vehicle.

### (Technical Idea 15)

In the propulsion device according to technical idea 14, the aerial vehicle includes an occupant compartment (14).

### (Technical Idea 16)

A propulsion device (15) is mounted on an aerial vehicle (10) including an occupant compartment (14) and configured to propel the aerial vehicle. The propulsion device includes a motor (61) configured to be driven by electric power to propel the aerial vehicle; and a drive housing (70) that houses the motor. The drive housing includes a housing inner surface (77) defining a housing space (171) in which the motor is housed, a housing outer surface (76) facing outward away from the housing inner surface and extending along an outer flow path (78, 123) located outward of the housing inner surface, a housing outer peripheral wall (71) extending in an axial direction (AD) and facing an outer peripheral side of the motor, a housing covering wall (73b) facing the motor in the axial direction, a housing outlet opening (176) provided in the housing outer peripheral wall, connecting the outer flow path and the housing space, and configured to allow gas to flow out of the housing space into the outer flow path, and a housing inlet opening (175) provided in the housing covering wall, through which the housing space communicates with an outside of the drive housing, allowing gas to flow into the housing space from the outside of the drive housing through the housing inlet opening. The motor includes a motor rotor (64) configured to rotate about a rotation axis (Cm), and a drive shaft (65) configured to rotate according to driving of the motor. The drive shaft includes a shaft inlet opening (166) through which an internal space (165) of the drive shaft communicates with an outside of the drive shaft, allowing gas to flow into the internal space from the housing inlet opening, and a shaft outlet opening (167) connecting the internal space and the housing space and configured to allow gas to flow out of the internal space into the housing space. The motor rotor includes a rotor blade (144) configured to create an airflow that causes gas to flow out of the housing space into the outer flow path through the housing outlet opening according to rotation of the motor rotor. The propulsion device further includes a foreign matter restriction part (185) configured to allow gas to flow into the housing inlet opening and restrict entry of foreign matter into the housing space through the housing inlet opening; an outflow restriction part (181) provided to the housing outlet opening and configured to transition between a restriction state (S1) restricting outflow of gas through the housing outlet opening and an allowance state (S2) allowing outflow of gas through the housing outlet opening, the outflow restriction part including an elastic restriction part (181) configured to transition from the restriction state to the allowance state by being elastically deformed by a flow of gas through the outer flow path, and transition from the allowance state to the restriction state by exerting restoring force against the flow of gas through the outer flow path; an air-blowing fan (64, 110, 115) configured to create an airflow that causes gas to flow out of the housing space into the outer flow path through the housing outlet opening; and an outer duct (120) covering the housing outer surface and the housing outlet opening and forming the outer flow path between the outer duct and the housing outer surface.

## Claims

1. A propulsion device (15) configured to propel a mobile object (10), the propulsion device comprising:
a propulsion drive unit (61, 86) configured to be driven by electric power to propel the mobile object; and
a drive housing (70, 90) that houses the propulsion drive unit, wherein
the drive housing includes
a housing inner surface (77, 97) defining a housing space (171, 241) in which the propulsion drive unit is housed,
a housing outer surface (76, 96) facing outward away from the housing inner surface and extending along an outer flow path (78, 123, 210) located outward of the housing inner surface, and
a housing outlet opening (176, 246) connecting the outer flow path and the housing space and configured to allow gas to flow out of the housing space into the outer flow path.

2. The propulsion device according to claim 1, wherein
the drive housing includes a housing inlet opening (175, 245) through which the housing space communicates with an outside of the drive housing, allowing gas to flow into the housing space from the outside of the drive housing through the housing inlet opening.

3. The propulsion device according to claim 2, comprising
a foreign matter restriction part (185) configured to allow gas to flow into the housing inlet opening and restrict entry of foreign matter into the housing space through the housing inlet opening.

4. The propulsion device according to claim 2 or 3, wherein
the drive housing includes
a housing outer peripheral wall (71) extending in an axial direction (AD) and facing an outer peripheral side of the propulsion drive unit, and
a housing covering wall (73b) facing the propulsion drive unit in the axial direction,
the housing outlet opening is provided in the housing outer peripheral wall, and
the housing inlet opening is provided in the housing covering wall.

5. The propulsion device according to claim 2 or 3, comprising
a cover member (200) facing the housing inlet opening in an axial direction and configured to allow gas to flow into the housing inlet opening and to guide foreign matter away from the housing inlet opening toward an outer periphery of the drive housing to restrict entry of the foreign matter into the housing inlet opening.

6. The propulsion device according to claim 2 or 3, wherein
the propulsion drive unit includes a drive shaft (65) configured to rotate according to driving of the propulsion drive unit, and
the drive shaft includes
a shaft inlet opening (166) through which an internal space (165) of the drive shaft communicates with an outside of the drive shaft, allowing gas to flow into the internal space from the housing inlet opening, and
a shaft outlet opening (167) connecting the internal space and the housing space and configured to allow gas to flow out of the internal space into the housing space.

7. The propulsion device according to claim 2 or 3, wherein
the propulsion device is configured to propel the mobile object by rotation of a propeller (20), and
the housing space communicates with the outside of the drive housing through the housing inlet opening in a downstream direction in a propeller airflow (Wp) generated by rotation of the propeller.

8. The propulsion device according to claim 1, comprising
an outflow restriction part (181, 183, 247) provided to the housing outlet opening and configured to transition between a restriction state (S1) restricting outflow of gas through the housing outlet opening and an allowance state (S2) allowing outflow of gas through the housing outlet opening.

9. The propulsion device according to claim 8, wherein
the outflow restriction part includes an elastic restriction part (181, 247) configured to
transition from the restriction state to the allowance state by being elastically deformed by a flow of gas through the outer flow path, and
transition from the allowance state to the restriction state by exerting restoring force against the flow of gas through the outer flow path.

10. The propulsion device according to claim 8 or 9, wherein
the outflow restriction part includes
a controlled restriction part (183) configured to be controlled to transition between the restriction state and the allowance state;
a restriction drive unit (183a) configured to be driven to cause the controlled restriction part to transition between the restriction state and the allowance state; and
a drive control unit (82) configured to control driving of the restriction drive unit.

11. The propulsion device according to claim 1 or 2, comprising
an air-blowing fan (64, 110, 115) configured to create an airflow that causes gas to flow out of the housing space into the outer flow path through the housing outlet opening.

12. The propulsion device according to claim 1 or 2, wherein
the propulsion drive unit includes a motor (61) including a motor rotor (64) configured to rotate about a rotation axis (Cm), and
the motor rotor includes a rotor blade (144) configured to create an airflow that causes gas to flow out of the housing space into the outer flow path through the housing outlet opening according to rotation of the motor rotor.

13. The propulsion device according to claim 1 or 2, comprising
an outer duct (120) covering the housing outer surface and the housing outlet opening and forming the outer flow path between the outer duct and the housing outer surface.

14. The propulsion device according to claim 1 or 2, wherein
the propulsion device is provided to an aerial vehicle (10) that is the mobile object, and is driven to propel the aerial vehicle.

15. The propulsion device according to claim 14, wherein the aerial vehicle includes an occupant compartment (14).

16. A propulsion device (15) mounted on an aerial vehicle (10) including an occupant compartment (14) and configured to propel the aerial vehicle, the propulsion device comprising:
a motor (61) configured to be driven by electric power to propel the aerial vehicle; and
a drive housing (70) that houses the motor, wherein
the drive housing includes
a housing inner surface (77) defining a housing space (171) in which the motor is housed,
a housing outer surface (76) facing outward away from the housing inner surface and extending along an outer flow path (78, 123) located outward of the housing inner surface,
a housing outer peripheral wall (71) extending in an axial direction (AD) and facing an outer peripheral side of the motor,
a housing covering wall (73b) facing the motor in the axial direction,
a housing outlet opening (176) provided in the housing outer peripheral wall, connecting the outer flow path and the housing space, and configured to allow gas to flow out of the housing space into the outer flow path, and
a housing inlet opening (175) provided in the housing covering wall, through which the housing space communicates with an outside of the drive housing, allowing gas to flow into the housing space from the outside of the drive housing through the housing inlet opening,
the motor includes
a motor rotor (64) configured to rotate about a rotation axis (Cm), and
a drive shaft (65) configured to rotate according to driving of the motor,
the drive shaft includes
a shaft inlet opening (166) through which an internal space (165) of the drive shaft communicates with an outside of the drive shaft, allowing gas to flow into the internal space from the housing inlet opening, and
a shaft outlet opening (167) connecting the internal space and the housing space and configured to allow gas to flow out of the internal space into the housing space,
the motor rotor includes a rotor blade (144) configured to create an airflow that causes gas to flow out of the housing space into the outer flow path through the housing outlet opening according to rotation of the motor rotor, and
the propulsion device further comprises:
a foreign matter restriction part (185) configured to allow gas to flow into the housing inlet opening and restrict entry of foreign matter into the housing space through the housing inlet opening;
an outflow restriction part (181) provided to the housing outlet opening and configured to transition between a restriction state (S1) restricting outflow of gas through the housing outlet opening and an allowance state (S2) allowing outflow of gas through the housing outlet opening, the outflow restriction part including an elastic restriction part (181) configured to
transition from the restriction state to the allowance state by being elastically deformed by a flow of gas through the outer flow path, and
transition from the allowance state to the restriction state by exerting restoring force against the flow of gas through the outer flow path;
an air-blowing fan (64, 110, 115) configured to create an airflow that causes gas to flow out of the housing space into the outer flow path through the housing outlet opening; and
an outer duct (120) covering the housing outer surface and the housing outlet opening and forming the outer flow path between the outer duct and the housing outer surface.
